# EUROPEAN PATENT APPLICATION

(11) **EP 4 114 061 A1**
(43) Date of publication of application: **04.01.2023**
(21) Application number: 22160248.5
(22) Date of filing: 04.03.2022
(51) Int. Cl.: H04W 12/04, H04W 12/069

(54) **NETWORK MANAGEMENT SYSTEM TO ONBOARD HETEROGENEOUS CLIENT DEVICES TO WIRELESS NETWORKS**

(30) Priority: 28.06.2021 US 202163215851 P; 17.12.2021 US 202117555295
(71) Applicant: Juniper Networks, Inc., Sunnyvale, CA 94089 (US)
(72) Inventor: DEY, Sanjoy, Sunnyvale, 94089 (US); HONG, Deanna Sue, Sunnyvale, 94089 (US); THOMAS, Jacob, Sunnyvale, 94089 (US); DEMENTYEV, Viacheslav, Sunnyvale, 94089 (US); YANG, Bo-Chieh, Sunnyvale, 94089 (US); BATCH, Jordan, Sunnyvale, 94089 (US)
(74) Representative: D Young & Co LLP

(57) **Abstract**

Techniques are described that enable onboarding of a plurality of heterogeneous client devices with secure access to a wireless network using a network management system (NMS). The NMS has a memory to store a plurality of private pre-shared keys (PPSKs), where each PPSK is provisioned for a particular client device or a particular group of client devices. In response to a key lookup request from an access point (AP) device for a client device, the NMS performs a key lookup and, in response to identifying a PPSK provisioned for the client device, authenticates the client device to access the wireless network via the AP device. The NMS then manages one or more of tracking the client device, policy application to the client device, or handling of network traffic from the client device while connected to the wireless network using the PPSK as an identifier of the client device.

## Description

This application claims priority to U.S. Application No. 17/555,295, filed December 17, 2021, which claims the benefit of U.S. Application No. U.S. Provisional Patent Application No. 63/215,851, filed 28 June 2021, the entire contents of which are incorporated herein by reference.

### TECHNICAL FIELD

The disclosure relates generally to computer networks and, more specifically, to providing secure access to wireless networks.

### BACKGROUND

Commercial premises, such as offices, hospitals, airports, stadiums, or retail outlets, often install complex wireless network systems, including a network of wireless access points (APs), throughout the premises to provide wireless network services to one or more wireless client devices (or simply, "clients"). APs are physical, electronic devices that enable other devices to wirelessly connect to a wired network using various wireless networking protocols and technologies, such as wireless local area networking protocols conforming to one or more of the IEEE 802.11 standards (i.e., "WiFi"), Bluetooth / Bluetooth Low Energy (BLE), mesh networking protocols such as ZigBee or other wireless networking technologies. Many different types of wireless client devices, such as laptop computers, smartphones, tablets, wearable devices, appliances, and Internet of Things (IoT) devices, incorporate wireless communication technology and can be configured to connect to wireless access points when the device is in range of a compatible wireless access point in order to access a wired network. As the client devices move throughout the premises, they may automatically switch or "roam" from one wireless access point to another, in-range wireless access point, so as to provide the users with seamless network connectivity throughout the premises.

### SUMMARY

In general, this disclosure describes techniques that enable onboarding of a plurality of heterogeneous client devices with secure access to a wireless network using a network management system (NMS). The disclosed techniques provide a scalable solution to provision and manage a unique pre-shared key (PSK) or private pre-shared key (PPSK) for each client device or group of client devices associated with a respective wireless network, and then use the PPSK as an identifier for the client device or group of client devices for tracking, policy application, and traffic management while connected to the respective wireless network. More specifically, certain examples of the disclosed techniques include network management systems arranged and operating based on a horizontal cloud-based architecture configured to scale and manage PPSK services to easily onboard, track, and assign policy to heterogeneous client devices, e.g., Bring-Your-Own-Device (BYOD) devices and/or Internet-of-Things (IOT) devices, connected to access points (APs) to access a wireless network.

The disclosed techniques enable a cloud-based network management system, for example, to efficiently manage onboarding of potentially millions of heterogeneous client devices on the wireless network, assignment of roles and polices to the client devices, and engineering of traffic intelligently based on security posture without the need for heavy weight on-premises authentication equipment or services, e.g., Radius, network admission control (NAC), captive portal infrastructure. In addition, the disclosed techniques provide a technical solution to the emerging issue of MAC address randomization that precludes the use of MAC addresses as a means of client device authorization and identification.

The techniques of this disclosure provide one or more technical advantages and practical applications. As an example, the horizontal cloud-based architecture described herein may include at least a PPSK manager within a cloud-based NMS with PPSK caching at the wireless network edge (e.g., APs). The PPSK manager is configured to provide cloud-scaled management of a PPSK store that is MAC address agnostic and scales to hundreds of thousands of PPSKs. The PPSK manager may also provide full representation state transfer (REST) application programming interface (API) support for automated PPSK management, including PPSK life-cycle management. The NMS and/or APs within the horizontal cloud-based architecture may use the PPSK provisioned for a client device or group of client devices as a vector for identifying the devices on an implicit trust model, which avoids or mitigates the MAC address randomization issue. The PPSK manager may use an API-based extensible policy framework to enable micro-segmentation of devices within the wireless network and application of user-intent labels to assign policies on a per-PPSK basis. In addition, the PPSK manager may define traffic forwarding methods from the APs, e.g., local forwarding or remote tunneling, on a per-PPSK basis. The disclosed techniques may provide these technical advantages and practical applications without need for any on-premises authentication equipment, e.g., Radius, NAC, or captive portal infrastructure, and without reliance on MAC address for client device authorization and identification.

In one example, the disclosure is directed to a network management system that manages a plurality of AP devices configured to provide a wireless network, the network management system comprising a memory storing a plurality of PPSKs, wherein each PPSK is provisioned for a particular client device or a particular group of client devices associated with the wireless network, and one or more processors coupled to the memory. The one or more processors are configured to perform, in response to a key lookup request from an AP device of the plurality of AP devices for a client device requesting access to the wireless network via the AP device, a key lookup in the memory based on at least a passphrase provided by the client device and included in the key lookup request; in response to identifying a PPSK provisioned for the client device in the memory, authenticate the client device to access the wireless network via the AP device; send key information of the PPSK for the client device to at least the AP device; and manage one or more of tracking the client device, policy application to the client device, or handling of network traffic from the client device while connected to the wireless network using the PPSK as an identifier of the client device.

In another example, the disclosure is directed to a method comprising storing, by a network management system, a plurality of PPSKs in a memory, wherein each PPSK is provisioned for a particular client device or a particular group of client devices associated with a wireless network provided by a plurality of AP devices managed by the network management system; performing, by the network management system, in response to a key lookup request from an AP device of the plurality of AP devices for a client device requesting access to the wireless network via the AP device, a key lookup in the memory based on at least a passphrase provided by the client device and included in the key lookup request; in response to identifying a PPSK provisioned for the client device in the memory, authenticating, by the network management system, the client device to access the wireless network via the AP device; sending, by the network management system, key information of the PPSK for the client device to at least the AP device; and managing, by the network management system, one or more of tracking the client device, policy application to the client device, or handling of network traffic from the client device while connected to the wireless network using the PPSK as an identifier of the client device.

In an additional example, the disclosure is directed to a computer-readable storage medium comprising instructions that, when executed, cause one or more processors of a network management system to store a plurality of PPSKs in a memory, wherein each PPSK is provisioned for a particular client device or a particular group of client devices associated with a wireless network provided by a plurality of AP devices managed by the network management system; perform, in response to a key lookup request from an AP device of the plurality of AP devices for a client device requesting access to the wireless network via the AP device, a key lookup in the memory based on at least a passphrase provided by the client device and included in the key lookup request; in response to identifying a PPSK provisioned for the client device in the memory, authenticate the client device to access the wireless network via the AP device; send key information of the PPSK for the client device to at least the AP device; and manage one or more of tracking the client device, policy application to the client device, or handling of network traffic from the client device while connected to the wireless network using the PPSK as an identifier of the client device.

The details of one or more examples of the techniques of this disclosure are set forth in the accompanying drawings and the description below. Other features, objects, and advantages of the techniques will be apparent from the description and drawings, and from the claims.

### BRIEF DESCRIPTION OF DRAWINGS

FIG. 1A is a block diagram of an example network system including a cloud-based network management system configured to onboard, track, and assign policy to heterogeneous client devices connected to access points (APs) to access a wireless network, in accordance with one or more techniques of this disclosure.
FIG. 1B is a block diagram illustrating further example details of the network system of FIG. 1A.
FIG. 2 is a block diagram of an example access point device, in accordance with one or more techniques of this disclosure.
FIG. 3 is a block diagram of an example network management system having a PPSK manager configured to provision, configure, and manage PPSKs for a plurality of heterogeneous client devices, in accordance with one or more techniques of this disclosure.
FIG. 4 is a block diagram of an example user equipment device, in accordance with one or more techniques of this disclosure.
FIG. 5 is a block diagram of an example network node, such as a router or switch, in accordance with one or more techniques of this disclosure.
FIG. 6 is a conceptual diagram illustrating an example communication flow to onboard a client device with secure access a wireless network based on a PPSK for the client device, in accordance with one or more techniques of this disclosure.
FIGS. 7, 8, 9, 10A and 10B illustrate example user interfaces generated by the PPSK manager of the network management system for display on a computing device of a network administrator to enable provisioning, configuration, and management of PPSKs, in accordance with the techniques of this disclosure.
FIGS. 11A-11C illustrate example PPSK self-provisioning portals for different types of onboarding workflows, in accordance with the techniques of this disclosure.
FIGS. 12A and 12B illustrate example user interfaces generated by the PPSK manager of the network management system for display on a computing device of a network administrator to enable configuration and management of onboarding workflows for PPSK self-provisioning portals, in accordance with the techniques of this disclosure, in accordance with the techniques of this disclosure.
FIG. 13 is a flow chart illustrating an example operation by which the network management system onboards, tracks, and assigns policy to heterogeneous client devices connected to APs to access a wireless network, in accordance with one or more techniques of this disclosure.

Like reference characters refer to like elements throughout the figures and description.

### DETAILED DESCRIPTION

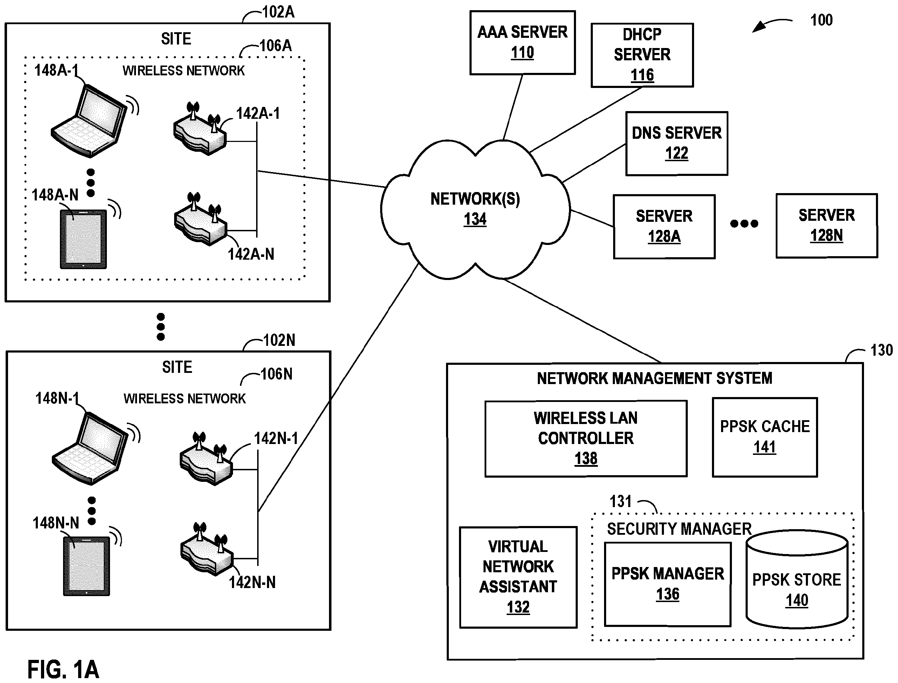

FIG. 1A is a block diagram of an example network system 100 including a cloud-based network management system (NMS) 130 configured to onboard, track, and assign policy to heterogeneous client devices connected to access points (APs) to access a wireless network, in accordance with one or more techniques of this disclosure.

Example network system 100 includes a plurality sites 102A-102N at which a network service provider manages one or more wireless networks 106A-106N, respectively. Although in FIG. 1A each site 102A-102N is shown as including a single wireless network 106A-106N, respectively, in some examples, each site 102A-102N may include multiple wireless networks, and the disclosure is not limited in this respect.

Each site 102A-102N includes a plurality of APs, referred to generally as APs 142. For example, site 102A includes a plurality of APs 142A-1 through 142A-N. Similarly, site 102N includes a plurality of APs 142N-1 through 142N-N. Each AP 142 may be any type of wireless access point, including, but not limited to, a commercial or enterprise AP, a router, or any other device capable of providing wireless network access.

Each site 102A-102N also includes a plurality of client devices, otherwise known as user equipment devices (UEs), referred to generally as UEs 148 or client devices 148, representing various wireless-enabled devices within each site. For example, UEs 148A-1 through148A-N are currently located at site 102A. Similarly, a plurality of UEs 148N-1 through 148N-N are currently located at site 102N. Each UE 148 may be any type of wireless client device, including, but not limited to, a mobile device such as a smart phone, tablet or laptop computer, a personal digital assistant (PDA), a wireless terminal, a smart watch, smart ring, or other wearable device. UEs 148 may also include IoT client devices such as printers, security devices, environmental sensors, or any other device configured to communicate over one or more wireless networks.

Example network system 100 also includes various networking components for providing networking services within the wired network including, as examples, an Authentication, Authorization and Accounting (AAA) server 110 for authenticating users and/or UEs 148, a Dynamic Host Configuration Protocol (DHCP) server 116 for dynamically assigning network addresses (e.g., IP addresses) to UEs 148 upon authentication, a Domain Name System (DNS) server 122 for resolving domain names into network addresses, a plurality of servers 128 (e.g., web servers, databases servers, file servers and the like), and NMS 130. As shown in FIG. 1A, the various devices and systems of network 100 are coupled together via one or more network(s) 134, e.g., the Internet and/or an enterprise intranet. Each one of the servers 110, 116, 122 and/or 128, APs 142, UEs 148, NMS 130, and any other servers or devices attached to or forming part of network system 100 may include a system log or an error log module wherein each one of these devices records the status of the device including normal operational status and error conditions.

In the example of FIG. 1A, NMS 130 is a cloud-based computing platform that manages wireless networks 106A-106N at one or more of sites 102A-102N. As further described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation.

In accordance with the techniques described in this disclosure, NMS 130 enables onboarding of a plurality of heterogeneous UEs or client devices 148 with secure access to one or more of wireless networks 106. As noted above, the heterogeneous UEs or client devices 148 may include any type of wireless client device or IoT device, including those designated as Bring-Your-Own-Device (BYOD) devices that may be user-owned and unaffiliated with a particular enterprise or corporate site 102 and/or wireless network 106.

The disclosed techniques provide a scalable solution to provision and manage a unique pre-shared key (PSK) or private pre-shared key (PPSK) for each client device or group of client devices 148 associated with a respective wireless network 106, and then use the PPSK as an identifier for the client device or group of client devices 148 for tracking, policy application, and traffic management while connected to the respective wireless network 106. More specifically, a horizontal cloud-based architecture, including NMS 130 and APs 142, is configured to scale and manage PPSK services to easily onboard, track, and assign policy to client devices 148 connected to APs 142 in a wireless network 106.

In the example illustrated in FIG. 1A, NMS 130 may include a front-end with a wireless local area network (LAN) controller (WLC) 138 and a PPSK cache 141, and a back-end security manager 131 having, in this example, a PPSK manager 136 and a PPSK store 140. PPSK store 140 stores a plurality of PPSKs, where each PPSK is provisioned for a particular client device 148 or a particular group of client devices 148 associated with a particular wireless network 106. PPSK store 140 stores key information for each of the PPSKs that does not include medium access control (MAC) addresses of the client devices for which the PPSKs are provisioned. In some examples, PPSK store 140 is hosted in a micro-services cloud infrastructure of NMS 130 with no scaling limits. The key information of each PPSK includes at least a key name and a key value, and optionally includes one or more labels indicative of role assignments of the PPSK and/or a virtual network identifier of the PPSK. PPSK cache 141 may be configured to hold a portion of the key information of the plurality of PPSKs stored in PPSK store 140. In addition, each AP 142 may also have a PPSK cache (not illustrated in FIG. 1A).

When a client device, e.g., client device 148A-1, requests access to a wireless network, e.g., wireless network 106A, via an AP device, e.g., AP device 142A-1, the client device and the AP device initial exchange capability information to associate the client device with the AP device. The AP device then performs verification or authentication of the client device, e.g., using a 4-way handshake, to provide secure access to the wireless network. As part of the authentication process, the client device sends a message to the AP device that at least includes a wireless network name, e.g., a service set identifier (SSID), and a passphrase associated with a PPSK provisioned for the client device. If the PPSK for the client device is not identified in the PPSK cache of the AP device, the AP device sends a key lookup request to NMS 130. In response to the key lookup request from the AP device, PPSK manager 136 performs a key lookup in PPSK store 140 based on at least the passphrase included in the key lookup request. Upon identifying the PPSK provisioned for the client device in PPSK store 140, PPSK manger 136 authenticates the client device to access the wireless network via the AP device. As part of the authentication process, PPSK manager 136 may determine whether the PPSK is valid for the client device based on whether a current date is past an expiration date for the PPSK or whether a number of concurrent active devices using the PPSK is below a usage limit for the PPSK.

After authentication, PPSK manager 136 sends the key information of the PPSK for the client device to at least the AP device. The AP device may then store the key information of the PPSK for the client device in its PPSK cache for a faster lookup process if the client device later requests access to the wireless network via the same AP device after roaming from another AP device in the wireless network. PPSK manager 136 is then able to manage policy application and tracking of the client device while connected to the wireless network using the PPSK as an identifier of the client device.

In some examples, PPSK manger 136 manages policy application to the client device by assigning one or more policies to the PPSK using one or more labels indicative of role assignments of the PPSK, and configuring the one or more policies at each of the AP devices 142. The AP device to which the client device is connected then applies the one or more policies to the client device identified by the PPSK. In other examples, PPSK manager 136 manages tracking of the client device by one or more of tracking user activity based on the key name of the PPSK rather than a MAC address of the client device, providing the key name of the PPSK for one or more client session logs, or tracking the client device using the key value of the PPSK. In further examples, PPSK manager 136 manages handling of network traffic from the client device for which the PPSK was provisioned by assigning a virtual network identifier, e.g., a virtual local area network (VLAN) ID, to the PPSK and designating a traffic forward method, e.g., local forwarding or remote tunneling, for the PPSK. The AP device to which the client device is connected then uses the designated traffic forwarding method based on the VLAN ID to forward traffic received from the client device identified by PPSK.

The disclosed techniques enable onboarding of potentially millions of heterogeneous client devices 148 on the wireless network 106, assignment of roles and polices to the client devices 148, and engineering of traffic intelligently based on security posture without the need for heavy weight on-premises authentication equipment or services, e.g., Radius, network admission control (NAC), or captive portal infrastructure. In addition, the disclosed techniques provide a solution to the emerging issue of MAC address randomization that precludes the use of MAC addresses as a means of client device authorization and identification.

The techniques of this disclosure provide one or more technical advantages and practical applications. The horizontal cloud-based architecture includes at least PPSK manager 136 and the full PPSK store 140 within the back-end of NMS 130 with PPSK caching at the wireless network edge (e.g., APs 142). In some examples, the horizontal cloud-based architecture further includes WLC 138 and PPSK cache 141 within the front-end of NMS 130. WLC 138 may be configured to distribute the key information held in PPSK cache 141 to one or more APs 142 that are within roaming distance from the AP device to which the client device is connected. Distributing the PPSK cache to neighboring AP devices may facilitate faster and more efficient key lookup processes when the client device roams between AP devices within the wireless network.

PPSK manager 136 is configured to provide cloud-scaled management of PPSK store 140 that is MAC address agnostic and scales to hundreds of thousands of PPSKs. PPSK manager 136 may provide full representation state transfer (REST) application programming interface (API) support for automated PPSK management, including PPSK life-cycle management. NMS 130 and/or APs 142 within the horizontal cloud-based architecture may use the PPSK provisioned for a client device or group of client devices 148 as a vector for identifying the devices 148 on an implicit trust model, which avoids or mitigates the MAC address randomization issue. PPSK manager 136 may use an API-based extensible policy framework, e.g., WxLAN, to enable micro-segmentation of devices 148 within the wireless network 106 and application of user-intent labels to assign policies on a per-PPSK basis. In addition, PPSK manager 136 may define traffic forwarding methods from the APs 142, e.g., local forwarding or remote tunneling, on a per-PPSK basis. The disclosed techniques may provide these technical advantages and practical applications without need for any on-premises authentication equipment, e.g., Radius, NAC, or captive portal infrastructure, and without reliance on MAC address for client device authorization and identification.

As an additional example, PPSK manager 136 may provide a self-provisioning portal with contractor, sponsored guest, or guest onboard workflows to enable users of UEs 148 to initiate PPSK provisioning based on user contact information. For example, an enterprise or corporate site 102 may include one or more kiosks or other lobby administrator computing devices through which the user may access the appropriate self-provisioning portal via an onboarding workflow-specific URL. In other examples, the user may access the self-provisioning portal on their own client device via the onboarding workflow-specific URL. The user may enter their contact information to request network access and receive network access credentials associated with a PPSK provisioned for the type of onboarding workflow. For example, the user may receive a passphrase of the PPSK via the provided contact information, e.g., via email. After receipt of the passphrase, the user may use their client device to scan a provided quick response (QR) code from the kiosk or lobby administrator computing device or otherwise enter an automatic WiFi connection URL via the client device, and then enter the provided credentials via the client device. In the contractor workflow scenario, the self-provisioning portal may utilize security assertion markup language (SAML) hooks for a single sign-on experience based on the contractor's sessions with other cloud-based computing services or applications of enterprise or corporate site 102.

In some examples, NMS 130 monitors one or more service level expectation (SLE) metrics received from wireless networks 106A-106N at each site 102A-102N, respectively, and manages network resources, such as APs 142 at each site, to deliver a high-quality wireless experience to end users, IoT devices and clients at the site. For example, NMS 130 may include a virtual network assistant (VNA) 132 that implements an event processing platform for providing real-time insights and simplified troubleshooting for IT operations, and that automatically takes corrective action or provides recommendations to proactively address wireless network issues. VNA 132 may, for example, include an event processing platform configured to process hundreds or thousands of concurrent streams of events from sensors and/or agents associated with APs 142 and/or nodes within network 134. For example, VNA 132 of NMS 130 may include an underlying analytics and network error identification engine and alerting system. The underlying analytics engine of VNA 132 may apply historical data and models to the inbound event streams to compute assertions, such as identified anomalies or predicted occurrences of events constituting network error conditions. Further, VNA 132 may provide real-time alerting and reporting to notify administrators of any predicted events, anomalies, trends, and may perform root cause analysis and automated or assisted error remediation. In some examples, VNA 132 of NMS 130 may apply machine learning techniques to identify the root cause of error conditions detected or predicted from the streams of event data. If the root cause may be automatically resolved, VNA 132 invokes one or more corrective actions to correct the root cause of the error condition, thus automatically improving the underlying SLE metrics and also automatically improving the user experience.

Further example details of operations implemented by the VNA 132 of NMS 130 are described in U.S. Application Serial Number 14/788,489, filed June 30, 2015, and entitled "Monitoring Wireless Access Point Events," U.S. Application Serial Number 16/835,757, filed March 31, 2020, and entitled "Network System Fault Resolution Using a Machine Learning Model," U.S. Application Serial Number 16/279,243, filed February 19, 2019, and entitled "Systems and Methods for a Virtual Network Assistant," U.S. Application Serial Number 16/237,677, filed December 31, 2018, and entitled "Methods and Apparatus for Facilitating Fault Detection and/or Predictive Fault Detection," U.S. Application Serial Number 16/251,942, filed January 18, 2019, and entitled "Method for Spatio-Temporal Modeling," and U.S. Application Serial Number 16/296,902, filed March 8, 2019, and entitled "Method for Conveying AP Error Codes Over BLE Advertisements," all of which are incorporated herein by reference in their entirety.

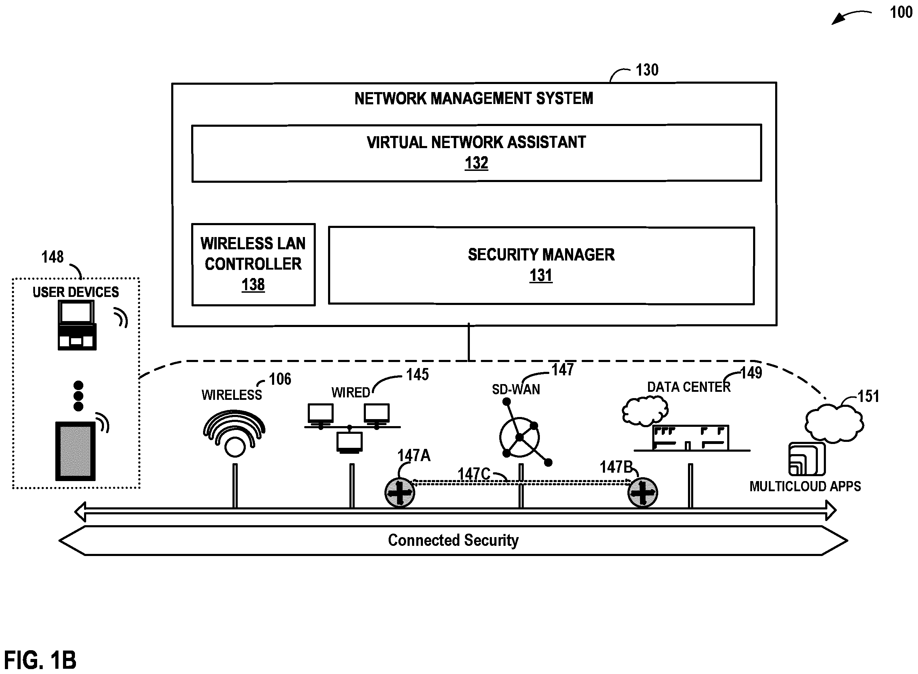

FIG. 1B is a block diagram illustrating further example details of the network system of FIG. 1A. In this example, FIG. 1B illustrates NMS 130 configured to operate according to an artificial intelligence / machine-learning-based computing platform providing comprehensive automation, insight, and assurance (WiFi Assurance, Wired Assurance and WAN assurance) spanning from wireless network 106 and wired LAN 145 networks at the network edge (far left of FIG. 1B) to cloud-based application services 151 hosted by computing resources within data centers 149 (far right of FIG. 1B).

As described herein, NMS 130 provides an integrated suite of management tools and implements various techniques of this disclosure. In general, NMS 130 may provide a cloud-based platform for wireless network data acquisition, monitoring, activity logging, reporting, predictive analytics, network anomaly identification, and alert generation. For example, network management system 130 may be configured to proactively monitor and adaptively configure network 100 so as to provide self-driving capabilities. Moreover, VNA 132 includes a natural language processing engine to provide AI-driven support and troubleshooting, anomaly detection, AI-driven location services, and AI-drive RF optimization with reinforcement learning.

As illustrated in the example of FIG. 1B, AI-driven NMS 130 also provides configuration management, monitoring and automated oversight of software defined wide-area network (SD-WAN) 147, which operates as an intermediate network communicatively coupling wireless networks 106 and wired LANs 145 to data centers 149 and application services 151. In general, SD-WAN 147 provides seamless, secure, traffic-engineered connectivity between "spoke" routers 147A of edge wired networks 145 hosting wireless networks 106, such as branch or campus networks, to "hub" routers 147B further up the cloud stack toward cloud-based application services 151. SD-WAN 147 often operates and manages an overlay network 147 on an underlying physical Wide-Area Network (WAN), which provides connectivity to geographically separate customer networks. In other words, SD-WAN 147 extends Software-Defined Networking (SDN) capabilities to a WAN and allows network(s) to decouple underlying physical network infrastructure from virtualized network infrastructure and applications such that the networks may be configured and managed in a flexible and scalable manner.

In some examples, underlying routers of SD-WAN 147 may implement a stateful, session-based routing scheme in which the routers 147A, 147B dynamically modify contents of original packet headers sourced by client devices 148 to steer traffic along selected paths, e.g., path 147C, toward application services 151 without requiring use of tunnels and/or additional labels. In this way, routers 147A, 147B may be more efficient and scalable for large networks since the use of tunnel-less, session-based routing may enable routers 147A, 147B to achieve considerable network resources by obviating the need to perform encapsulation and decapsulation at tunnel endpoints. Moreover, in some examples, each router 147A, 147B may independently perform path selection and traffic engineering to control packet flows associated with each session without requiring use of a centralized SDN controller for path selection and label distribution. In some examples, routers 147A, 147B implement session-based routing as Secure Vector Routing (SVR), provided by Juniper Networks, Inc.

Additional information with respect to session-based routing and SVR is described in U.S. Patent No. 9,729,439, entitled "COMPUTER NETWORK PACKET FLOW CONTROLLER," and issued on August 8, 2017; U.S. Patent No. 9,729,682, entitled "NETWORK DEVICE AND METHOD FOR PROCESSING A SESSION USING A PACKET SIGNATURE," and issued on August 8, 2017; U.S. Patent No. 9,762,485, entitled "NETWORK PACKET FLOW CONTROLLER WITH EXTENDED SESSION MANAGEMENT," and issued on September 12, 2017; U.S. Patent No. 9,871,748, entitled "ROUTER WITH OPTIMIZED STATISTICAL FUNCTIONALITY," and issued on January 16, 2018; U.S. Patent No. 9,985,883, entitled "NAME-BASED ROUTING SYSTEM AND METHOD," and issued on May 29, 2018; U.S. Patent No. 10,200,264, entitled "LINK STATUS MONITORING BASED ON PACKET LOSS DETECTION," and issued on February 5, 2019; U.S. Patent No. 10,277,506, entitled "STATEFUL LOAD BALANCING IN A STATELESS NETWORK," and issued on April 30, 2019; U.S. Patent No. 10,432,522, entitled "NETWORK PACKET FLOW CONTROLLER WITH EXTENDED SESSION MANAGEMENT," and issued on October 1, 2019; and U.S. Patent Application Publication No. 2020/0403890, entitled "IN-LINE PERFORMANCE MONITORING," published on December 24, 2020, the entire content of each of which is incorporated herein by reference in its entirety.

In some examples, AI-driven NMS 130 may enable intent-based configuration and management of network system 100, including enabling construction, presentation, and execution of intent-driven workflows for configuring and managing devices associated with wireless networks 106, wired LAN networks 145, and /or SD-WAN 147. For example, declarative requirements express a desired configuration of network components without specifying an exact native device configuration and control flow. By utilizing declarative requirements, what should be accomplished may be specified rather than how it should be accomplished. Declarative requirements may be contrasted with imperative instructions that describe the exact device configuration syntax and control flow to achieve the configuration. By utilizing declarative requirements rather than imperative instructions, a user and/or user system is relieved of the burden of determining the exact device configurations required to achieve a desired result of the user/system. For example, it is often difficult and burdensome to specify and manage exact imperative instructions to configure each device of a network when various different types of devices from different vendors are utilized. The types and kinds of devices of the network may dynamically change as new devices are added and device failures occur. Managing various different types of devices from different vendors with different configuration protocols, syntax, and software versions to configure a cohesive network of devices is often difficult to achieve. Thus, by only requiring a user/system to specify declarative requirements that specify a desired result applicable across various different types of devices, management and configuration of the network devices becomes more efficient. Further example details and techniques of an intent-based network management system are described in US Patent 10,756,983, entitled "Intent-based Analytics," and US Patent 10,992,543, entitled "Automatically generating an intent-based network model of an existing computer network," each of which is hereby incorporated by reference.

In accordance with the techniques described in this disclosure, NMS 130 enables onboarding of a plurality of heterogeneous UEs or client devices 148 with end-to-end, integrated "connected security" for secure access that extends, in some examples, all the way from wireless networks 106 up to application services 151. As noted above, the heterogeneous UEs or client devices 148 may include any type of wireless client device or IoT device, including those designated as Bring-Your-Own-Device (BYOD) devices that may be user-owned and unaffiliated with a particular enterprise or corporate site 102 and/or wireless network 106.

The disclosed techniques provide a full stack, cloud-based, scalable solution to provision and manage a unique PSK or PPSK for each client device or group of client devices 148 associated with a respective wireless network 106, and then use the PPSK as an identifier for the client device or group of client devices 148 for tracking, policy application, and traffic management while connected to the respective wireless network 106. More specifically, a horizontal cloud-based architecture, including NMS 130 and APs 142, is configured to scale and manage PPSK services to easily onboard, track, and assign policy to client devices 148 connected to APs 142 in a wireless network 106.

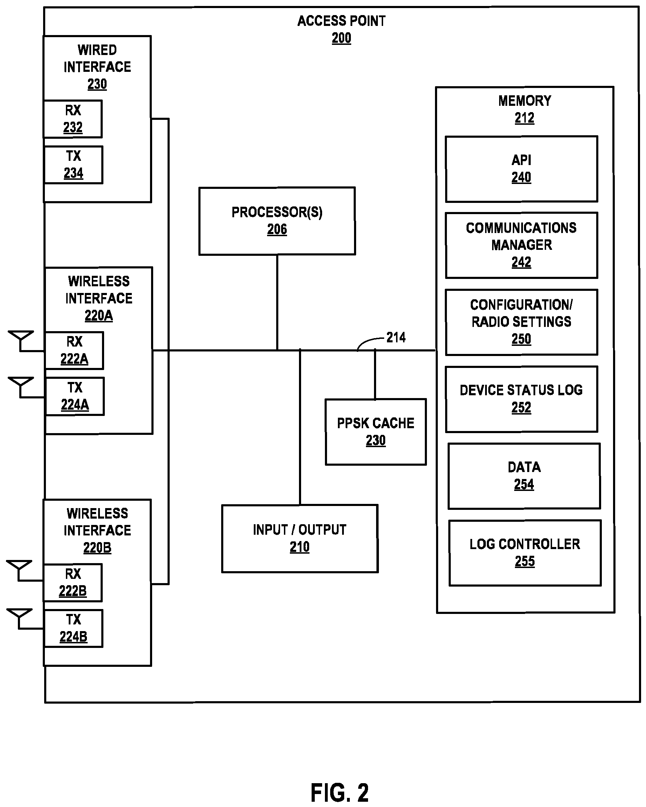

FIG. 2 is a block diagram of an example access point (AP) device 200 configured in accordance with one or more techniques of this disclosure. Example access point 200 shown in FIG. 2 may be used to implement any of APs 142 as shown and described herein with respect to FIG. 1A. Access point 200 may comprise, for example, a Wi-Fi, Bluetooth and/or Bluetooth Low Energy (BLE) base station or any other type of wireless access point.

In the example of FIG. 2, access point 200 includes a wired interface 230, wireless interfaces 220A-220B one or more processor(s) 206, memory 212, and input/output 210 coupled together via a bus 214 over which the various elements may exchange data and information. Wired interface 230 represents a physical network interface and includes a receiver (RX) 232 and a transmitter (TX) 234 for sending and receiving network communications, e.g., packets. Wired interface 230 couples, either directly or indirectly, access point 200 to network(s) 134 of FIG. 1A. First and second wireless interfaces 220A and 220B represent wireless network interfaces and include receivers (RX) 222A and 222B, respectively, each including a receive antenna via which access point 200 may receive wireless signals from wireless communications devices, such as UEs 148 of FIG. 1A. First and second wireless interfaces 220A and 220B further include transmitters (TX) 224A and 224B, respectively, each including transmit antennas via which access point 200 may transmit wireless signals to wireless communications devices, such as UEs 148 of FIG. 1A. In some examples, first wireless interface 220A may include a Wi-Fi 802.11 interface (e.g., 2.4 GHz and/or 5 GHz) and second wireless interface 220B may include a Bluetooth interface and/or a Bluetooth Low Energy (BLE) interface.

Processor(s) 206 are programmable hardware-based processors configured to execute software instructions, such as those used to define a software or computer program, stored to a computer-readable storage medium (such as memory 212), such as computer-readable mediums including a storage device (e.g., a disk drive, or an optical drive) or a memory (such as Flash memory or RAM) or any other type of volatile or non-volatile memory, that stores instructions to cause the one or more processors 206 to perform the techniques described herein.

Memory 212 includes one or more devices configured to store programming modules and/or data associated with operation of access point 200. For example, memory 212 may include a computer-readable storage medium, such as computer-readable mediums including a storage device (e.g., a disk drive, or an optical drive) or a memory (such as Flash memory or RAM) or any other type of volatile or non-volatile memory, that stores instructions to cause the one or more processor(s) 206 to perform the techniques described herein.

In this example, memory 212 stores executable software including an application programming interface (API) 240, a communications manager 242, configuration settings 250, a device status log 252, data storage 254, and log controller 255. Device status log 252 includes a list of events specific to access point 200. The events may include a log of both normal events and error events such as, for example, memory status, reboot events, crash events, Ethernet port status, upgrade failure events, firmware upgrade events, configuration changes, etc., as well as a time and date stamp for each event. Log controller 255 determines a logging level for the device based on instructions from NMS 130. Data 254 may store any data used and/or generated by access point 200, including data collected from UEs 148, such as data used to calculate one or more SLE metrics, that is transmitted by access point 200 for cloud-based management of wireless networks 106A by NMS 130.

Input/output (I/O) 210 represents physical hardware components that enable interaction with a user, such as buttons, a display, and the like. Although not shown, memory 212 typically stores executable software for controlling a user interface with respect to input received via I/O 210.

Communications manager 242 includes program code that, when executed by processor(s) 206, allow access point 200 to communicate with UEs 148 and/or network(s) 134 via any of interface(s) 230 and/or 220A-220C. Configuration settings 250 include any device settings for access point 200 such as radio settings for each of wireless interface(s) 220A-220C. These settings may be configured manually or may be remotely monitored and managed by NMS 130 to optimize wireless network performance on a periodic (e.g., hourly or daily) basis.

As described herein, AP device 200 may include a PPSK cache 230 configured to hold a portion of the key information of the plurality of PPSKs stored in PPSK store 140 in NMS 130 of FIG. 1A. When communications manager 242 receives a request from a UE or client device to access the wireless network, communications manager 242 perform a key lookup in PPSK cache 230 based on least a passphrase provided by the client device in the access request message. In response to identifying the PPSK provisioned for the client device in PPSK cache 230, communications manager 242 may authenticate the client device to access the wireless network via AP device 200, and may send an authorization notification to PPSK manager 136 in NMS 130. If the PPSK for the client device is not identified in PPSK cache 230, communications manager 242 sends a key lookup request to PPSK manager 136 in NMS 130. In this case, upon authentication of the client device by PPSK manager 136, communications manager 242 of AP device 200 receives the key information of the PPSK for the client device for inclusion in PPSK cache 230. In some examples, communications manager 242 may receive key information of one or more PPSKs and/or a full PPSK cache from WLC 138 of NMS 130 for inclusion in PPSK cache 230.

In some examples, PPSK manager 136 may configure one or more policies assigned to one or more PPSKs at AP 200, e.g., by storing the policies or policy markers in data storage 254. Communications manager 242 or another functional component of AP device 200 may then apply the one or more policies to a client device or UE identified by a particular PPSK when connected to the wireless network via AP device 200. In addition, communications manager 242 or another functional component of AP device 200 may determine a designated traffic forwarding method and a virtual network identifier, e.g., a VLAN ID, assigned to a PPSK, and forward traffic received from a client device or UE identified by the PPSK in accordance with the designated traffic forwarding method and based on the VLAN ID. The designated traffic forwarding method may be a local forwarding or remote forwarding via tunnels to a DMZ, data center, or other network where the VLAN is available.

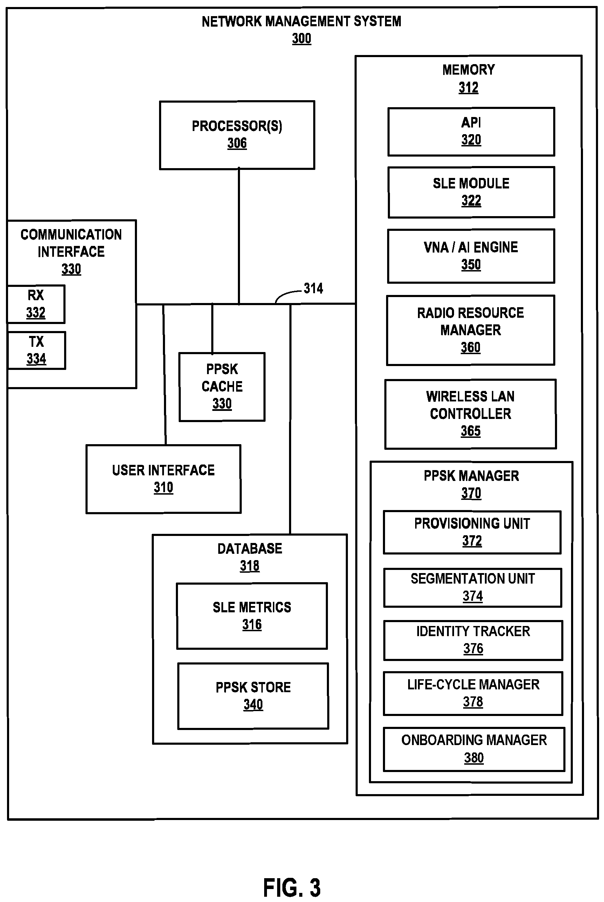

FIG. 3 shows an example NMS 300 having a PPSK manager 370 configured to provision, configure, and manage PPSKs for a plurality of heterogeneous client devices, in accordance with one or more techniques of this disclosure. NMS 300 and PPSK manager 370 may operate substantially similar to NMS 130 and PPSK manager 136 of FIG. 1A. In such examples, NMS 300 is responsible for monitoring and management of one or more wireless networks 106A-106N at sites 102A-102N, respectively. In some examples, NMS 300 receives data collected by APs 200 from UEs 148, such as data used to calculate one or more SLE metrics, and analyzes this data for cloud-based management of wireless networks 106A-106N. In some examples, NMS 300 may be part of another server shown in FIG. 1A or a part of any other server.

NMS 300 includes a communications interface 330, one or more processor(s) 306, a user interface 310, a memory 312, and a database 318. The various elements are coupled together via a bus 314 over which the various elements may exchange data and information.

Processor(s) 306 execute software instructions, such as those used to define a software or computer program, stored to a computer-readable storage medium (such as memory 312), such as computer-readable mediums including a storage device (e.g., a disk drive, or an optical drive) or a memory (such as Flash memory or RAM) or any other type of volatile or non-volatile memory, that stores instructions to cause the one or more processors 306 to perform the techniques described herein.

Communications interface 330 may include, for example, an Ethernet interface. Communications interface 330 couples NMS 300 to a network and/or the Internet, such as any of network(s) 134 as shown in FIG. 1A, and/or any local area networks. Communications interface 330 includes a receiver (RX) 332 and a transmitter (TX) 334 by which NMS 300 receives/transmits data and information to/from any of APs 142, servers 110, 116, 122, 128 and/or any other devices or systems forming part of network 100 such as shown in FIG. 1A. The data and information received by NMS 300 may include, for example, SLE related or event log data received from access points 200 used by NMS 300 to remotely monitor the performance of wireless networks 106A-106N. NMS may further transmit data via communications interface 330 to any of network devices such as APs 142 at any of network sites 102A-102N to remotely manage wireless networks 106A-106N.

Memory 312 includes one or more devices configured to store programming modules and/or data associated with operation of NMS 300. For example, memory 312 may include a computer-readable storage medium, such as computer-readable mediums including a storage device (e.g., a disk drive, or an optical drive) or a memory (such as Flash memory or RAM) or any other type of volatile or non-volatile memory, that stores instructions to cause the one or more processor(s) 306 to perform the techniques described herein.

In this example, memory 312 includes an API 320, an SLE module 322, a virtual network assistant (VNA)/AI engine 350, a radio resource management (RRM) engine 360, a wireless LAN controller (WLC) 365, and a PPSK manager 370. NMS 300 may also include any other programmed modules, software engines and/or interfaces configured for remote monitoring and management of wireless networks 106A-106N, including remote monitoring and management of any of APs 142/200.

SLE module 322 enables set up and tracking of thresholds for SLE metrics for each network 106A-106N. SLE module 322 further analyzes SLE-related data collected by APs, such as any of APs 142 from UEs in each wireless network 106A-106N. For example, APs 142A-1through142A-N collect SLE-related data from UEs 148A-1through 148A-N currently connected to wireless network 106A. This data is transmitted to NMS 300, which executes by SLE module 322 to determine one or more SLE metrics for each UE 148A-1 through 148A-N currently connected to wireless network 106A. This data, in addition to any network data collected by one or more APs 142A-1 through 142A-N in wireless network 106A, is transmitted to NMS 300 and stored as, for example, SLE metrics 316 in database 318.

RRM engine 360 monitors one or more metrics for each site 106A-106N in order to learn and optimize the RF environment at each site. For example, RRM engine 360 may monitor the coverage and capacity SLE metrics for a wireless network 106 at a site 102 in order to identify potential issues with SLE coverage and/or capacity in the wireless network 106 and to make adjustments to the radio settings of the access points at each site to address the identified issues. For example, RRM engine may determine channel and transmit power distribution across all APs 142 in each network 106A-106N. For example, RRM engine 360 may monitor events, power, channel, bandwidth, and number of clients connected to each AP. RRM engine 360 may further automatically change or update configurations of one or more APs 142 at a site 106 with an aim to improve the coverage and capacity SLE metrics and thus to provide an improved wireless experience for the user.

VNA/AI engine 350 may operate substantially similar to VNA 132 of FIG. 1A. VNA/AI engine 350 analyzes data received from APs 142/200 as well as its own data to identify when undesired to abnormal states are encountered in one of wireless networks 106A-106N. For example, VNA/AI engine 350 may identify the root cause of any undesired or abnormal states, e.g., any poor SLE metric(s) at one or more of wireless network 106A-106N. In addition, VNA/AI engine 350 may automatically invoke one or more corrective actions intended to address the identified root cause(s) of one or more poor SLE metrics. Examples of corrective actions that may be automatically invoked by VNA/AI engine 350 may include, but are not limited to, invoking RRM 360 to reboot one or more APs, adjusting/modifying the transmit power of a specific radio in a specific AP, adding SSID configuration to a specific AP, changing channels on an AP or a set of APs, etc. The corrective actions may further include restarting a switch and/or a router, invoke downloading of new software to an AP, switch, or router, etc. These corrective actions are given for example purposes only, and the disclosure is not limited in this respect. If automatic corrective actions are not available or do not adequately resolve the root cause, VNA/AI engine 350 may proactively provide a notification including recommended corrective actions to be taken by IT personnel to address the network error.

In accordance with one or more techniques of this disclosure, NMS 300 enables onboarding of a plurality of heterogeneous client devices with secure access to one or more wireless networks. PPSK manager 370 is configured to provision and manage a unique PSK or PPSK for each client device or group of client devices associated with a respective wireless network. WLC 365 and PPSK manager 370 may then use the PPSK as an identifier for the client device or group of client devices for purposes of tracking, policy application, and/or handling of network traffic while connected to the respective wireless network 106.

In the illustrated example of FIG. 3, PPSK manager 370 includes a provisioning unit 372, a segmentation unit 374, an identity tracker 376, a life-cycle manager 378, and an onboarding manager 380.

Provisioning unit 372 may be configured to provision a plurality of PPSKs with each PPSK being provisioned for a particular client device or a particular group of client devices associated with a particular wireless network. Provisioning unit 372 may then notify a user of the particular client device, e.g., via email, of at least a unique passcode of the PPSK associated with the particular wireless network. In the illustrated example of FIG. 3, NMS 300 includes a PPSK store 340 within database 318 configured to store key information of the provisioned PPSKs, and may also include a PPSK cache 330 accessible by WLC 365 that is configured to temporarily hold a portion of the key information stored in PPSK store 340. PPSK store 340 may be hosted in a micro-services cloud infrastructure of NMS 300 with no scaling limits. PPSK store 340 is also MAC address randomization agnostic as it does not store a mapping of MAC addresses to PPSKs.

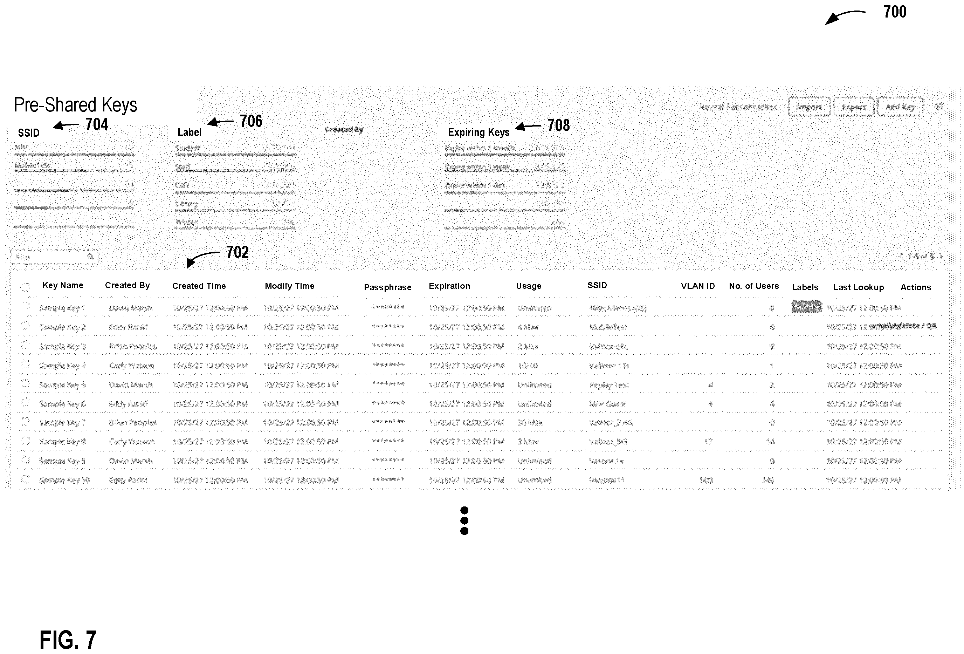

Provisioning unit 372 may receive data from a network administrator via user interface 310, and configure and edit the PPSKs for particular client devices based on the received data. Provisioning unit 372 may configure a PPSK for a particular client device with at least a key name, a wireless network name or SSID, and a unique passphrase. Provisioning unit 372 may further associate contact information, e.g., an email address, of a user of the particular client device with the PPSK for notification purposes. In addition, provisioning unit 372 may configure the PPSK with a virtual network identifier, e.g., a VLAN ID, a designated traffic forwarding method, and/or one or more roll assignments, e.g., using one or more labels. Provisioning unit 372 may also configure the PPSK with a usage limit (e.g., a maximum number of concurrent client devices using the PPSK, in the case where the PPSK is provisioned for a group of client devices) and an expiration date including reminder information that indicates whether to notify the user of the client device prior to the expiration. Example user interfaces configured to receive the data used to configure the PPSKs are described with respect to FIGS. 7, 8, 9, 10A and 10B.

Segmentation unit 374 may be configured to use an API-based extensible policy framework, e.g., WxLAN, to enable micro-segmentation of client devices within the wireless network and application of user-intent labels to assign policies on a per-PPSK basis. For example, segmentation unit 374 may assign one or more policies to the PPSK using one or more labels indicative of role assignments of the PPSK. NMS 300 may configure the one or more policies at each of the AP devices within the wireless network such that the AP devices to which the client device connects are able to apply the one or more policies to the client device identified by the PPSK. As another example, segmentation unit 374 may assign a virtual network identifier, e.g., a VLAN ID, to the PPSK and designate a traffic forward method, e.g., local forwarding or remote tunneling, for the PPSK. The AP devices to which the client device connects then use the designated traffic forwarding method based on the VLAN ID to forward traffic received from the client device identified by PPSK.

Identity tracker 376 may be configured to use the PPSK provisioned for the client device or group of client devices as a vector for identifying the client devices on an implicit trust model, which avoids or mitigates the MAC address randomization issue. For example, identify tracker 376 may track the client device by one or more of tracking user activity based on the key name of the PPSK rather than a MAC address of the client device, providing the key name of the PPSK for one or more client session logs (e.g., webhooks and/or websockets), or tracking the client device using the key value of the PPSK.

Life-cycle manager 378 may be configured to manage auto-expiration and new key migration for at least a portion of the provisioned PPSKs stored in PPSK store 340. Life-cycle manager 378 may assign an expiration date to a PPSK to initiate periodic migration to new PPSKs for client devices defined with a long-term role (e.g., employee or student) and/or to increase security by quickly deleting or modifying PPSKs provisioned for client devices defined with a short-term role (e.g., guest). API 320 and/or PPSK manager 370 may also provide full REST API support for automated PPSK management, including PPSK life-cycle management.

In one example, life-cycle manager 378 may, upon the expiration date of an original PPSK for a client device, provision a new PPSK for the client device having the same set of settings as the original PPSK or a modified set of settings. In another example, life-cycle manager 378 may enable temporary use of multiple active PPSKs for a particular client device or group of client devices. More specifically, life-cycle manager 378 may provision a new PPSK for the client device as specified such that both the original PPSK and the new PPSK are valid for the client device during a window of time prior to the expiration date of the original PPSK to enable migration from the original PPSK to the new PPSK for the client device. During the time when both the original PPSK and the new PPSK are valid for the client device, identify tracker 376 may be configured to track PPSK usage for the original key versus the new key.

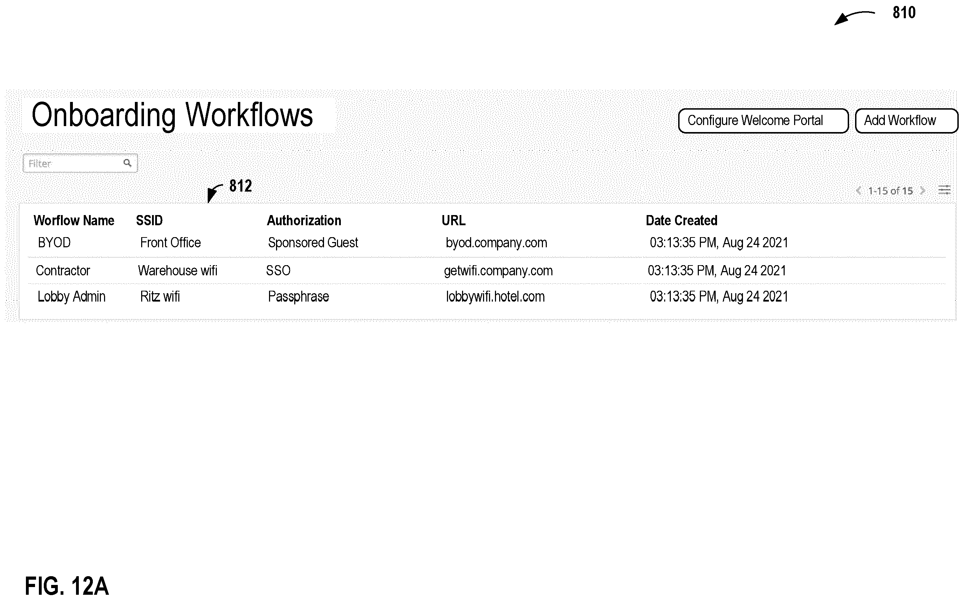

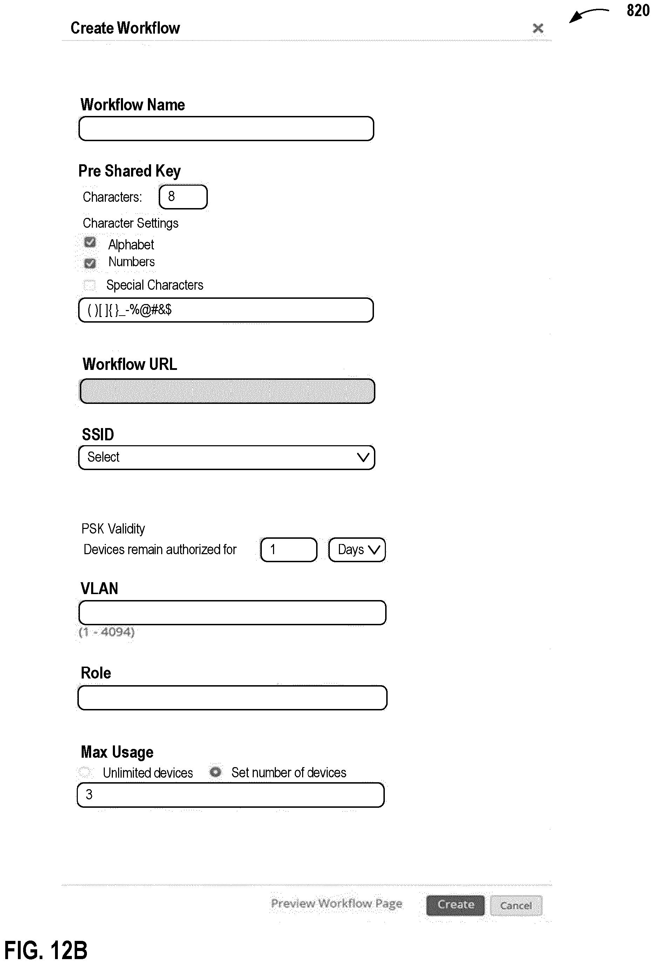

Onboarding manager 380 may configure and manage different types of onboarding workflows for PPSK self-provisioning portals. Onboarding manger 380 may configure one or more onboarding workflows to enable PPSK self-provisioning portals for users that are guests, contractors, or other short-term access holders. For example, onboarding manager 380 may configure one or more of a contractor workflow, a guest workflow, or a sponsored guest workflow to enable client devices of users that fall within one of the workflow categories to self-provision PPSKs to access the associated wireless network. To configure the onboarding workflows, onboarding manger 380 may generate data representative of a workflow user interface for display on the computing device of the network administrator, and define PPSK parameters, authorization requirements, and/or portal appearance for a particular type of onboarding workflow based on the data received from the computing device via the workflow user interface. For example, for each type of onboarding workflow, onboarding manager 380 may configure the one or more PPSKs for client devices associated for users that fall within that workflow, including the virtual network identifier, role assignments, usage limit, and/or expiration or validity limits. Example user interfaces configured to manage and configure the onboarding workflows for PPSK self-provisioning are described with respect to FIGS. 12A and 12B.

Onboarding manger 380 also generates data representative of a user interface of a PPSK self-provisioning portal for display on an end-user computing device, e.g., on the client device itself or on a kiosk or other computing device of a lobby administrator at a particular enterprise or corporate site. The user interface of the PPSK self-provisioning portal may vary between the different types of onboarding workflows, but at least includes one or more fillable fields to receive contact information of the user of the client device, e.g., email address. Based on the contact information of the user received from the end-user computing device via the user interface, provisioning unit 372 of PPSK manager 370 provisions the PPSK for the client device in accordance with the particular type of onboarding workflow of the PPSK self-provisioning portal, and outputs the passphrase of the PPSK to at least one of the end user computing device or the client device.

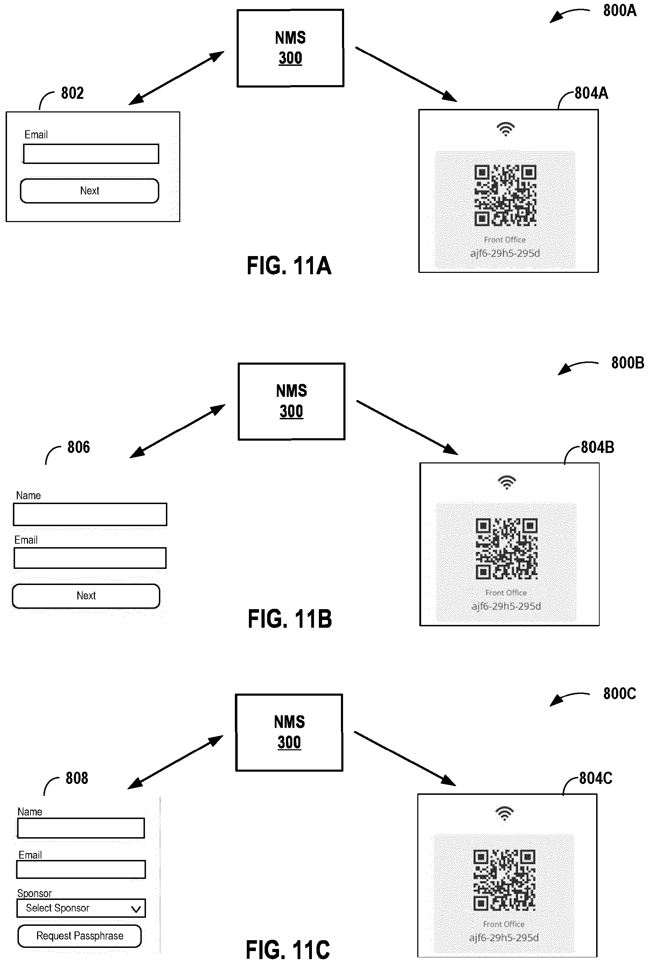

In the case of a contractor onboarding workflow in which the contractor's contact information is included in a user directory of the enterprise or corporate site, provisioning unit 372 provisions the PPSK for the particular client device or for contractor client devices more generally in response to identifying the contact information of the contractor in the user directory. In the case of a guest onboarding workflow in which the enterprise may have no prior knowledge of the guest or the guest's client device, provisioning unit 372 provisions the PPSK for the guest client devices in response to receiving a guest access request from a lobby administrator for the contact information of the guest. In the case of a sponsored guest onboarding workflow in which an employee of the enterprise may vouch for the sponsored guest or their client device, provisioning unit 372 provisions the PPSK for the particular client device or for sponsored guest client devices more generally in response to receiving approval from the sponsor for the contact information of the sponsored guest. Example user interfaces configured to receive the user contact information and output a QR code and/or credentials to the user are described with respect to FIGS. 11A-11C.

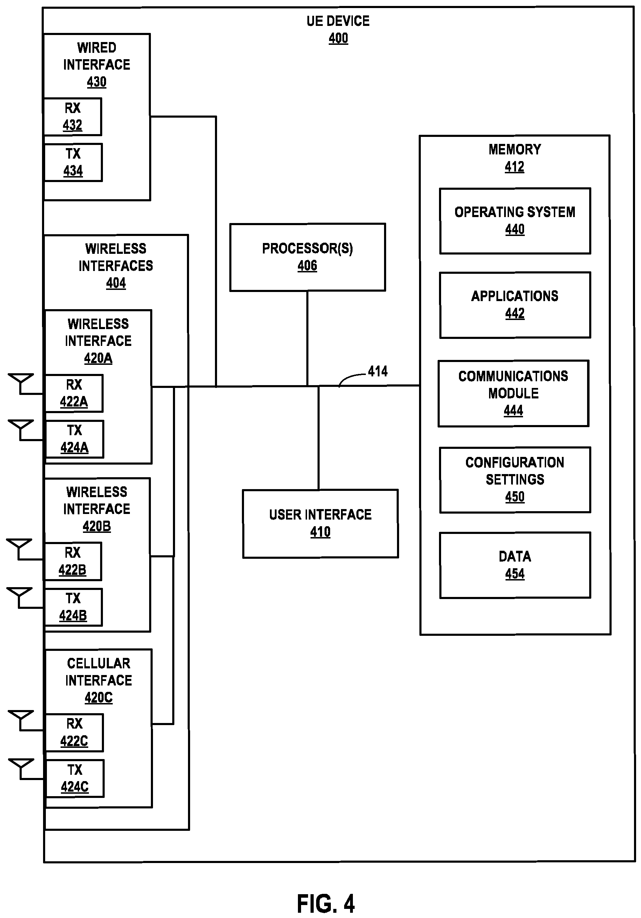

FIG. 4 shows an example user equipment (UE) device 400. Example UE device 400 shown in FIG. 4 may be used to implement any of UEs 148 as shown and described herein with respect to FIG. 1A. UE device 400 may include any type of wireless client device, and the disclosure is not limited in this respect. For example, UE device 400 may include a mobile device such as a smart phone, tablet or laptop computer, a personal digital assistant (PDA), a wireless terminal, a smart watch, a smart ring, or any other type of mobile or wearable device. UE 400 may also include any type of IoT client device such as a printer, a security sensor or device, an environmental sensor, or any other connected device configured to communicate over one or more wireless networks. UE 400 may comprise a wireless client device designated as a BYOD device that is user-owned and unaffiliated with a particular enterprise or corporate site and/or wireless network.

In accordance with one or more techniques of this disclosure, PPSK manager 136, 370 provisions a PPSK for UE device 400 to access a particular wireless network, either as an individual device or as a defined group of devices. PPSK manger 136 may notify a user of UE device 400, e.g., via email, of at least the unique passcode of the PPSK associated with the particular wireless network. When UE 400 later requests access to the particular wireless network via an AP device, the AP device may perform verification or authentication of UE 400 based at least on the passphrase provided by UE 400 as part of the authentication handshake.

UE device 400 includes a wired interface 430, wireless interfaces 404 including wireless interfaces 420A-420C, one or more processor(s) 406, memory 412, and a user interface 410. The various elements are coupled together via a bus 414 over which the various elements may exchange data and information. Wired interface 430 includes a receiver (RX) 432 and a transmitter (TX) 434. Wired interface 430 may be used, if desired, to couple UE 400 to network(s) 134 of FIG. 1A. First, second and third wireless interfaces 420A, 420B, and 420C include receivers (RX) 422A, 422B, and 422C, respectively, each including a receive antenna via which UE 400 may receive wireless signals from wireless communications devices, such as APs 142 of FIG. 1A, AP 200 of FIG. 2, other UEs 148, or other devices configured for wireless communication. First, second, and third wireless interfaces 420A, 420B, and 420C further include transmitters (TX) 424A, 424B, and 424C, respectively, each including transmit antennas via which UE 400 may transmit wireless signals to wireless communications devices, such as APs 142 of FIG. 1A, AP 200 of FIG. 2, other UEs 138 and/or other devices configured for wireless communication. In some examples, first wireless interface 420A may include a Wi-Fi 802.11 interface (e.g., 2.4 GHz and/or 5 GHz) and second wireless interface 420B may include a Bluetooth interface and/or a Bluetooth Low Energy interface. Third wireless interface 420C may include, for example, a cellular interface through which UE device 400 may connect to a cellular network.

Processor(s) 406 execute software instructions, such as those used to define a software or computer program, stored to a computer-readable storage medium (such as memory 412), such as computer-readable mediums including a storage device (e.g., a disk drive, or an optical drive) or a memory (such as Flash memory or RAM) or any other type of volatile or non-volatile memory, that stores instructions to cause the one or more processors 406 to perform the techniques described herein.

Memory 412 includes one or more devices configured to store programming modules and/or data associated with operation of UE 400. For example, memory 412 may include a computer-readable storage medium, such as computer-readable mediums including a storage device (e.g., a disk drive, or an optical drive) or a memory (such as Flash memory or RAM) or any other type of volatile or non-volatile memory, that stores instructions to cause the one or more processor(s) 406 to perform the techniques described herein.

In this example, memory 412 includes an operating system 440, applications 442, a communications module 444, configuration settings 450, and data storage 454. Data storage 454 may store any data used and/or generated by UE 400 that is collected by UE 400 and transmitted to any of APs 138 in a wireless network 106 for further transmission to NMS 130. For example, data storage 454 may include, for example, one or more passphrases for known wireless network names (e.g., SSIDs). In other examples, the one or more passphrases may be included in configuration settings 450 for wireless interfaces 404.

Communications module 444 includes program code that, when executed by processor(s) 406, enables UE 400 to communicate using any of wired interface(s) 430, wireless interfaces 420A-420B and/or cellular interface 450C. Configuration settings 450 include any device settings for UE 400 and/or settings for each of wireless interface(s) 420A-420B and/or cellular interface 420C.

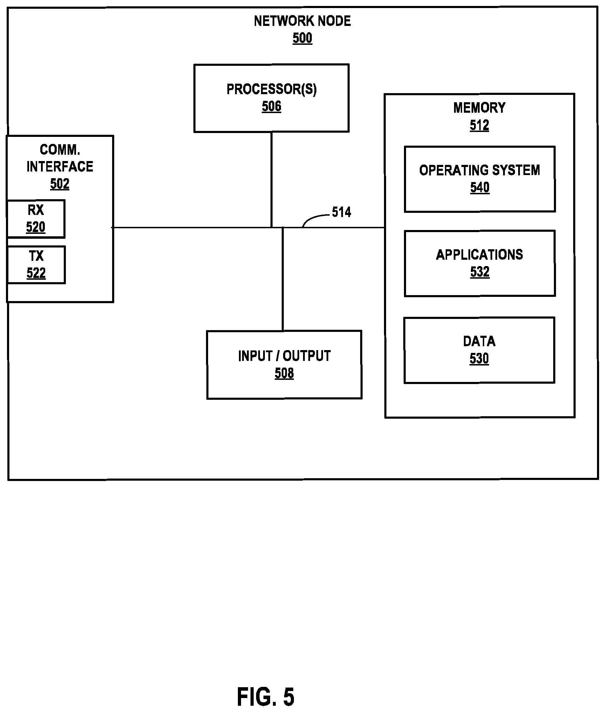

FIG. 5 is a block diagram illustrating an example network node 500 configured according to the techniques described herein. In one or more examples, the network node 500 implements a device or a server attached to the network 134 of FIG. 1, e.g., router, switch, AAA server, DHCP server, DNS server, VNA, Web server, etc., or a network device such as, e.g., routers, switches, or the like. In some embodiments, network node 500 of FIG. 5 is server 110, 116, 122, 128, of FIG. 1A or routers / switches of network 134 of FIG. 1A.

In this example, network node 500 includes a communications interface 502, e.g., an Ethernet interface, a processor 506, input / output 508, e.g., display, buttons, keyboard, keypad, touch screen, mouse, etc., a memory 512 coupled together via a bus 514 over which the various elements may interchange data and information. Communications interface 502 couples the network node 500 to a network, such as an enterprise network. Though only one interface is shown by way of example, those skilled in the art should recognize that network nodes may, and usually do, have multiple communication interfaces. Communications interface 502 includes a receiver (RX) 520 via which the network node 500, e.g., a server, can receive data and information, e.g., including operation related information, registration requests, AAA services, DHCP requests, Simple Notification Service (SNS) look-ups, and Web page requests. Communications interface 502 includes a transmitter (TX) 522, via which the network node 500, e.g., a server, can send data and information, e.g., including configuration information, authentication information, web page data, etc.

Memory 512 stores executable software applications 532, operating system 540 and data/information 530. Data 530 may include a system log and/or error log that stores SLE metrics for node 500 and/or other devices, such as wireless access points, based on a logging level according to instructions from the network management system. Network node 500 may, in some examples, forward the SLE metrics to a network management system (e.g., NMS 130 of FIG. 1A) for analysis as described herein. In some examples, network node 500 may provide a platform for execution of WLC 138 and/or PPSK manager 136.

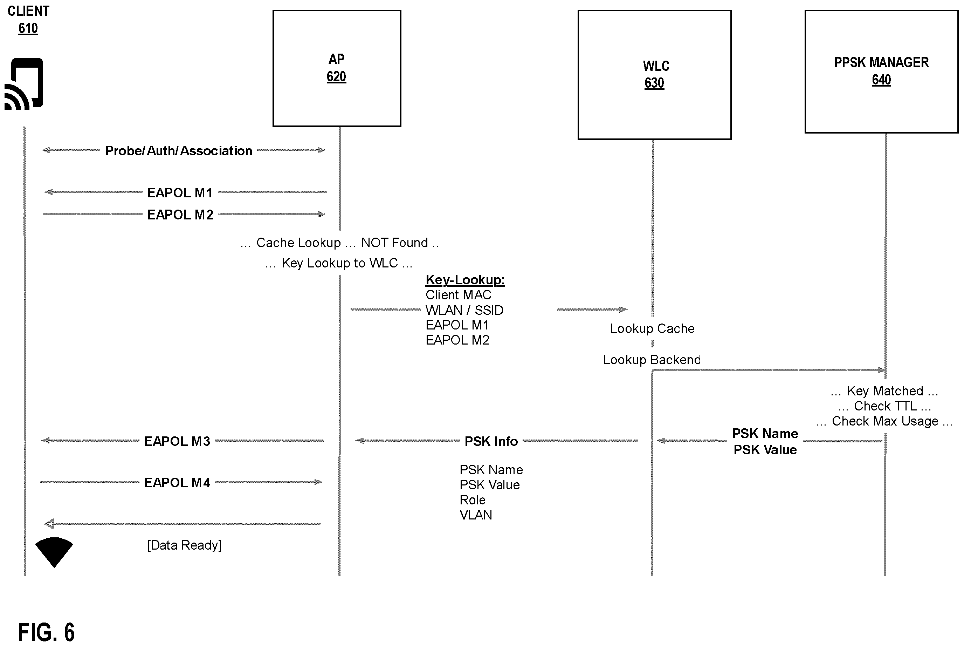

FIG. 6 is a conceptual diagram illustrating an example communication flow to onboard a client device with secure access a wireless network based on a PPSK for the client device, in accordance with one or more techniques of this disclosure. In the illustrated example, the network system includes a client device 610, an AP device 620, a WLC 630, and a PPSK manager 640. Client device 610 may operate substantially similar to any of UEs 148 of FIG. 1A and UE 400 of FIG. 4. AP device 620 may operate substantially similar to any of APs 142 of FIG. 1A and AP device 200 of FIG. 2. WLC 630 may operate substantially similar to WLC 138 within a front-end of NMS 130 of FIG. 1A and WLC 365 within NMS 300 of FIG. 3. PPSK manager 640 may operate substantially similar to PPSK manager 136 within a back-end of NMS 130 of FIG. 1A and PPSK manager 370 within NMS 300 of FIG. 3.

When client device 610 requests access to a wireless network via AP device 620, client device 610 and AP device 620 initial exchange capability information to associate client device 610 with AP device 620 (illustrated in FIG. 6 as the "Probe/Auth/Association" exchange). AP device 620 may then perform verification or authentication of the client device, e.g., using an 802.11-standard 4-way handshake, to provide secure access to the wireless network using either 802.11x or PSKs. In according with this disclosure, AP device 620 performs authentication for secure access using PSKs or, more precisely, unique or private PSKs. The 4-way handshake is illustrated in FIG. 6 as the four extensible authentication protocol over LAN (EAPOL) messages between client device 610 and AP device 620. The second EAPOL message (EAPOL M2) sent from client device 610 to AP device 620 at least includes a passphrase associated with a PPSK provisioned for the client device. The EAPOL M2 message may also include a wireless network name, e.g., a SSID or AP MAC address, a client device MAC address, and/or an encrypted hash received from AP device 620 in the EAPOL M1 message.

In response to the EAPOL M2 message, AP device 620 performs a key lookup in its PPSK cache. If the PPSK provisioned for client device 610 is not identified in the AP's PPSK cache, AP device 620 sends a key lookup request to WLC 630, where the key lookup request includes the client device MAC address, the SSID of the wireless network, and the information included in EAPOL M1 and EAPOL M2, which includes the passphrase associated the PPSK for the client device. WLC 630 performs a key lookup in the WLC's PPSK cache and, when the PPSK for client device 610 is not identified in the WLC's PPSK cache, WLC 630 initiates a lookup in the back-end via PPSK manager 640.

In response to the key lookup request, PPSK manager 640 performs a key lookup in the full PPSK store based on at least the passphrase included in the key lookup request. Upon identifying the PPSK provisioned for the client device in the PPSK store, PPSK manger 640 authenticates the client device to access the wireless network via AP device 620. As part of the authentication process, PPSK manager 640 may determine whether the PPSK is valid for the client device based on whether a current date is past an expiration date for the PPSK (e.g., the time-to-live (TTL) of the PPSK) or whether a number of concurrent active devices using the PPSK is below a usage limit for the PPSK (e.g., the max usage of the PPSK).

After authentication, PPSK manager 640 sends the key information of the PPSK for client device 610 to at least AP device 620. The key information of the PPSK includes at least a key name and a key value, and optionally includes one or more labels indicative of role assignments of the PPSK and/or a virtual network identifier, e.g., a VLAN ID, of the PPSK. As illustrated in FIG. 6, PPSK manager 640 may send the key name and key value to WLC 630 for inclusion in the WLC's PPSK cache, and WLC 630 may then send the key information including the key name, key value, role assignments, and VLAN ID to AP device 620 for inclusion in the AP's PPSK cache.

In some examples, WLC 630 may be configured to distribute the key information of one or more PPSKs and/or the full PPSK cache from WLC 630 to one or more AP devices. WLC 630 may be configured to detect one or more neighboring AP devices of AP device 620 within the wireless network to which client device 610 could roam from AP device 620. WLC 630 may then send the key information of the PPSK for client device 610 and/or the full PPSK cache to the one or more neighboring AP devices. In this way, when client device 610 roams to another AP device within the wireless network, the new AP device may already have the key information of the PPSK for client device 610 in the AP's PPSK cache to facilitate a faster and more efficient key lookup process when client device 610 roams between AP devices within the wireless network.

AP device 620 and client device 610 then complete the 4-way handshake including exchanging the EAPOL M3 message to establish a broadcast channel and the EAPOL M4 message to confirm key installation at client 610. Client device 610 may then being using the secure access channel to communicate with the wireless network via AP device 620. AP device 620, WLC 630, and PPSK manager 640 are then able to manage policy application and tracking of client device 610, and handling of network traffic from client device 610, while connected to the wireless network using the PPSK as an identifier of client device 610.

FIGS. 7, 8, 9, 10A, and 10B illustrate example user interfaces generated by the PPSK manager of the network management system for display on a computing device of a network administrator to enable provisioning, configuration, and management of PPSKs, in accordance with the techniques of this disclosure.

FIG. 7 illustrates an example "pre-shared keys" user interface 700 that presents a full list of provisioned PPSKs 702 and distributions of the provisioned PPSKs by each of SSID 704, label 706, and expiring keys 708. For each of the provisioned PPSKs, full list 702 indicates a key name, an administrator or other person responsible for creating the key, a date and time at which the key was created, a date and time at which the key was last modified, a passphrase, an expiration date and time, a usage limit, a SSID, a VLAN ID, a current number of users, any assigned labels, a date and time of a last key lookup in the PPSK store, and any available actions with respect to the key. In some examples, the available actions for a particular key may include one or more of: email a user of the client device for which the PPSK is provisioned; delete the PPSK; or present a QR code associated with the PPSK. It should be noted that the full list of provisioned PPSKs 702 does not include any MAC addresses of the client devices for which the PPSKs are provisioned.

The SSID distribution 704 may comprise a bar graph or other visualization that indicates a number of the PPSKs configured for each of one or more particular SSIDs, e.g., the top 5 SSIDs having the highest numbers of associated PPSKs. The label distribution 706 may comprise a bar graph or other visualization that indicates a number of the PPSKs configured with each of one or more different labels, e.g., the top 5 labels having the highest numbers of associated PPSKs. The labels may be indicative of role assignments, e.g., student, staff, cafe, library, printer, of the PPSKs. The expiring keys distribution 708 may comprise a bar graph or other visualization that indicates a number of the PPSKs configured to expire within different time periods, e.g., within 1 month, within 1 week, or within 1 day.

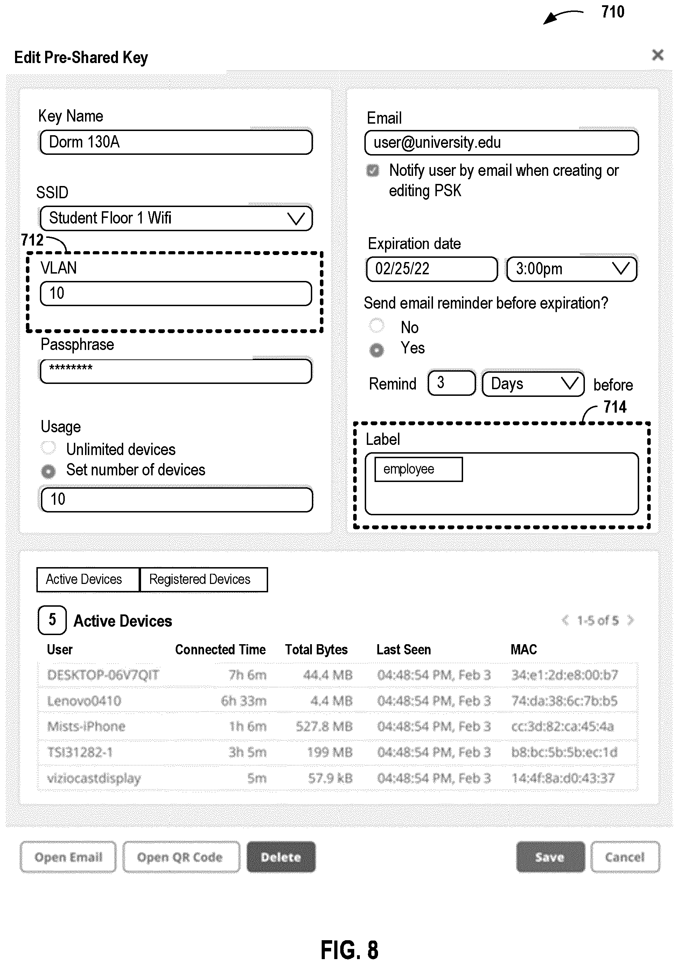

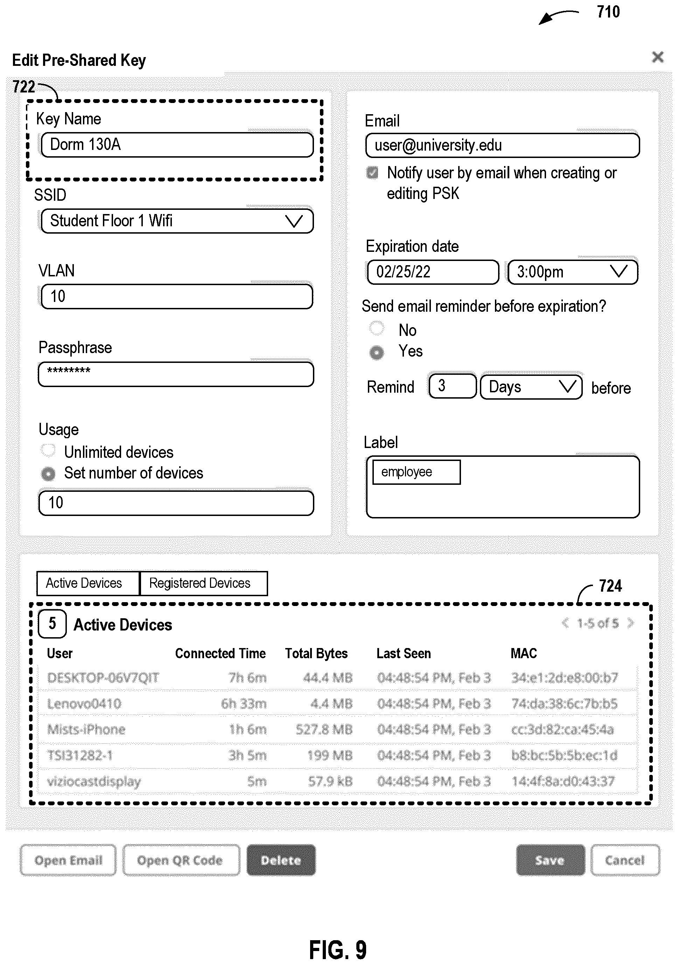

FIGS. 8 and 9 each illustrate an "edit pre-shared key" user interface 710 through which the network administrator may configure and edit PPSKs for particular client devices. User interface 710 presents multiple selectable options and multiple fillable fields to receive data used to configure a particular PPSK provisioned for a particular client device or group of client devices.

For example, user interface 710 includes fillable fields to receive a key name 722, a SSID, and a unique passphrase of the PPSK. User interface 710 also includes a fillable field to receive an email address of a user of the client device for which the PPSK was provisioned and a selectable option to notify the user by email when creating or editing the PPSK. In this way, the PPSK manager 136, 370 may configure, based on data received via user interface 710, the PPSK with a key name, a wireless network name, and a unique passphrase. The PPSK manager 136, 370 may further associate, based on data received via the user interface 710, contact information of the user of the client device with the PPSK.

As another example, user interface 710 includes a fillable field 712 to receive a virtual network identifier, such as a VLAN ID. In this way, the PPSK manager 136, 370 may configure, based on data received via user interface 710, the PPSK with the virtual network identifier. In some examples, the PPSK manager 136, 370 may further configured the PPSK with a traffic forwarding method comprising one of local forwarding or remote tunneling of traffic from the AP device. As a further example, user interface 710 includes a fillable field 714 to receive one or more labels indicative of one or more role assignments of the PPSK, such as employee. In this way, the PPSK manager 136, 370 may configure, based on data received via user interface 710, the PPSK with one or more role assignments.

As another example, user interface 710 includes a selectable option for a usage limit of the PPSK to be an unlimited number of devices or a set number of devices, and a fillable field to receive the set number of devices when that option is selected. In this way, the PPSK manager 136, 370 may configure, based on data received via user interface 710, the PPSK with a usage limit comprising one of unlimited devices or the set number of devices. In the case where the usage limit is a set number of devices, the number of devices is determined based on a number of concurrent active devices using the PPSK at a given time. User interface 710 also includes a list of concurrent active devices 724 using the PPSK.

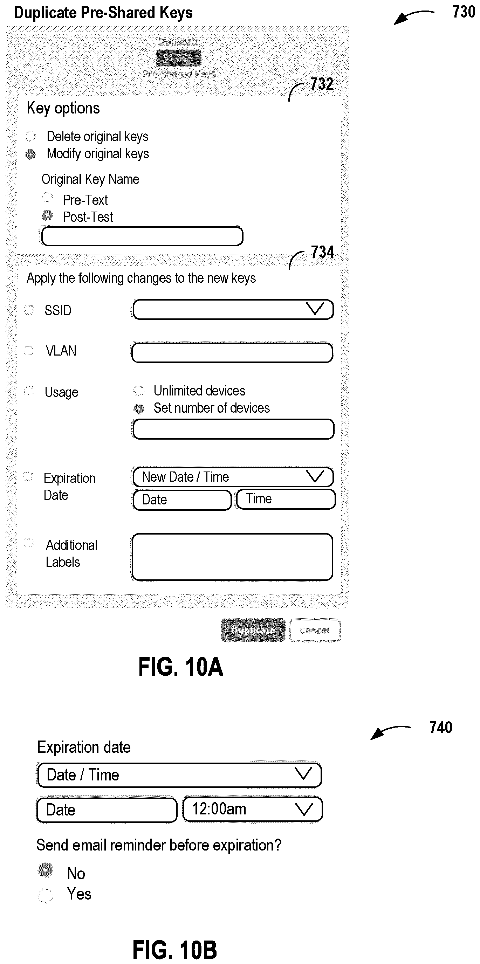

User interface 710 further includes fillable fields to receive an expiration date and time for the PPSK, and a selectable option to email a reminder to a user of the client device a configurable amount of time before expiration of the key. The expiration date fields are described in more details with respect to FIG. 10B.

In FIG. 8, the VLAN fillable field 712 and the label fillable field 714 in user interface 710 are emphasized to indicate different ways of applying network segmentation to client devices on a per-PPSK basis, e.g., for policy application or traffic forwarding. For example, the PPSK manager 136, 370 may use an API-based extensible policy framework, e.g., WxLAN, to enable micro-segmentation of client devices within a wireless network using VLAN assignment on a per-PPSK basis, role assignment on a per-PPSK basis, and/or traffic forwarding method assignment, e.g., local forwarding or remote tunneling, on a per-PPSK basis. For example, the NMS 130, 300 may assign one or more policies to the PPSK using the one or more labels, and the APs 142, 200 may be configured to apply the policies to the client device based on the labels assigned to the PPSK provisioned for client device.

In FIG. 9, the key name fillable field 722 and the active devices list 724 in user interface 710 are emphasized to indicate different ways of performing tracking of the client devices using the PPSKs as identifiers of the client devices. For example, the NMS 130, 300 and/or the APs 142, 200 may use the PPSK provisioned for a client device or group of client devices as a vector for identifying the devices on an implicit trust model, which avoids or mitigates the MAC address randomization issue. For example, the NMS 130, 300 and/or the APs 142, 200 may track user activity based on the key name of the PPSK for the client device rather than a MAC address of the client device, and may provide the key name of the PPSK for the client device for one or more client session logs. Alternatively, or in addition, the NMS 130, 300 and/or the APs 142, 200 may track the client device using the key value of the PPSK for the client device.

FIG. 10A illustrates a "duplicate pre-shared keys" user interface 730 through which the network administrator may create duplicate keys as new keys having a same set of settings as existing keys. User interface 730 includes a key options portion 732 and a key changes portion 734. The key options portion 732 presents selectable options to either delete original keys or modify original keys, and a fillable field to receive the original key name either pre-text or post-text. The key changes portion 743 presents multiple fillable fields to receive changes to the settings of the original or existing key being duplicated. For example, the new key may be created with changes to any of the SSID, VLAN, usage limit, expiration date, or labels of the original key.

FIG. 10B illustrates an "expiration date" user interface 740, which may be a portion of the edit pre-shared key user interface 710 illustrated in FIGS. 8 and 9. The expiration date user interface 740 presents fillable fields to receive an expiration date and time for the key, and a selectable option to email a reminder to a user of the client device before expiration of the key. In this way, the PPSK manager 136, 370 may configure, based on data received via user interface 740, the PPSK with an expiration date and reminder information that indicates whether to notify the user of the client device before expiration of the PPSK.

Based on the data received via the duplicate pre-shared keys user interface 730 and the expiration date user interface 740, the PPSK manager 136, 370 may, upon the expiration date of an original PPSK for a client device, provision the new PPSK for the client device having the same set of settings as the original PPSK or a modified set of settings. Alternatively, the PPSK manager 136, 370 may provision a new PPSK for the client device as specified such that both the original PPSK and the new PPSK are valid for the client device during a window of time prior to the expiration date of the original PPSK to enable migration from the original PPSK to the new PPSK for the client device.

FIGS. 11A-11C illustrate example PPSK self-provisioning portals for different types of onboarding workflows, in accordance with the techniques of this disclosure.

FIG. 11A illustrates an example PPSK self-provisioning portal for a contractor onboarding workflow 800A. In the scenario where the user is a contractor or another type of temporary but known entity to the enterprise, the user's contact information is likely included in a user directory of the enterprise. As such, in a contractor onboarding workflow, the contractor may be authorized to access the associated wireless network via a single sign-on experience using SAML hooks and based on identifying the contractor's contact information in the user directory.

As illustrated in FIG. 11A, the client device, or a kiosk or other computing device of a lobby administrator, accesses the PPSK self-provisioning portal associated with the contractor onboarding workflow via a contractor onboarding workflow-specific URL, and displays a user interface 802 of the PPSK self-provisioning portal associated with the contractor onboarding workflow. User interface 802 includes a fillable field to receive an email address of the contractor. The PPSK self-provisioning portal then sends the received contact information to NMS 300 using SAML. NMS 300, or more specifically PPSK manager 370 of NMS 300, compares the contractor's email address against the user directory of the enterprise. Upon identifying the contractor's email address in the user directory, NMS 300 provisions the PPSK for the particular client device or for contractor client devices more generally. NMS 300 outputs a QR code 804A to one of the client device or the kiosk or other computing device of the lobby administrator, and sends a passphrase of the PPSK to the contractor's email address. After receipt of the passphrase, the contractor may use their client device to scan the provided QR code or otherwise enter an automatic WiFi connection URL via the client device, and then enter the passphrase via the client device to access the wireless network.

FIG. 11B illustrates an example PPSK self-provisioning portal for a guest onboarding workflow 800B. In the scenario where the user is a guest, the enterprise may have no prior knowledge of the guest or the guest's client device. In a guest onboarding workflow, the guest may be authorized to access the associated wireless network via the passphrase of the PPSK provisioned based on receipt of the guest's contact information by a lobby administrator.

As illustrated in FIG. 11B, a kiosk or other computing device of a lobby administrator accesses the PPSK self-provisioning portal associated with the guest onboarding workflow via a guest onboarding workflow-specific URL, and displays a user interface 806 of the PPSK self-provisioning portal associated with the guest onboarding workflow. User interface 806 includes a first fillable field to receive the guest's name and a second fillable field to receive the guest's email address. The PPSK self-provisioning portal then sends a guest access request for the received contact information to NMS 300. NMS 300, or more specifically PPSK manager 370 of NMS 300, provisions the PPSK for guest client devices generally. In some examples, NMS 300 may generate data representative of a limited user interface (not shown) for the lobby administrator to view and/or manage the current guests of the enterprise or corporate site. NMS 300 outputs a QR code 804B to the kiosk or other computing device of the lobby administrator, and sends a passphrase of the PPSK to the guest's email address. After receipt of the passphrase, the guest may use their client device to scan the provided QR code or otherwise enter an automatic WiFi connection URL via the client device, and then enter the passphrase via the client device to access the wireless network.

FIG. 11C illustrates an example PPSK self-provisioning portal for a sponsored guest or BYOD onboarding workflow 800C. In the scenario where the user is a sponsored guest, the enterprise may have no prior knowledge of the guest or the guest's client device but an employee of the enterprise may vouch for the sponsored guest or their client device. In a sponsored guest onboarding workflow, the sponsored guest may be authorized to access the associated wireless network via approval from the identified sponsor of the sponsored guest.

As illustrated in FIG. 11C, the client device, or a kiosk or other computing device of a lobby administrator, accesses the PPSK self-provisioning portal associated with the sponsored guest onboarding workflow via a sponsored guest onboarding workflow-specific URL, and displays a user interface 808 of the PPSK self-provisioning portal associated with the sponsored guest onboarding workflow. User interface 808 includes a first fillable field to receive the sponsored guest's name, a second fillable field to receive the sponsored guest's email address, and a drop-down field to select a sponsor. The PPSK self-provisioning portal then sends a sponsored guest access request for the received contact information to NMS 300, which then sends an approval request to the identified sponsor, e.g., via email. Upon receipt of approval from the sponsor for the contact information of the sponsored guest, NMS 300, or more specifically PPSK manager 370 of NMS 300, provisions the PPSK for the particular client device or for sponsored guest client devices more generally. NMS 300 outputs a QR code 804C to one of the client device or the kiosk or other computing device of the lobby administrator, and sends a passphrase of the PPSK to the sponsored guest's email address. After receipt of the passphrase, the sponsored guest may use their client device to scan the provided QR code or otherwise enter an automatic WiFi connection URL via the client device, and then enter the passphrase via the client device to access the wireless network.

FIGS. 12A and 12B illustrate example user interfaces generated by the PPSK manager of the network management system for display on a computing device of a network administrator to enable configuration and management of onboarding workflows for PPSK self-provisioning portals, in accordance with the techniques of this disclosure, in accordance with the techniques of this disclosure.

FIG. 12A illustrates an example "onboarding workflows" user interface 810 that presents a full list of different types of configured onboarding worflows 812. For each of the configured onboarding workflows, full list 812 indicates a workflow name, an SSID of an associated wireless network, an authorization type, an onboarding workflow-specific URL, and a date and time at which the workflow was created. In the example of FIG. 12A, user interface 810 includes links or buttons to "configure welcome portal" and "add workflow." In addition, the network administrator may select any of the existing onboarding worflows in full list 812 to view or modify the current configuration of the workflows.

FIG. 12B illustrates and example "create workflow" user interface 820 through which the network administrator may configure and edit a workflow and PPSKs for client devices of users that fall within the workflow. User interface 820 presents multiple selectable options and multiple fillable fields to receive data used to configure the particular workflow and define parameters of PPSKs provisioned for the group of client devices associated with the particular workflow.

For example, user interface 820 includes a fillable field to receive a workflow name, a fillable field to receive a minimum character constraint and selectable options on character settings of PPSKs, a selectable option of an SSID, a selectable option of a PPSK validity period or expiration time, a fillable field to receive a virtual network identifier, such as a VLAN ID, a fillable field to receive one or more labels indicative of one or more role assignments, and a selectable option for a usage limit to be an unlimited number of devices or a set number of devices and a fillable field to receive the set number of devices when that option is selected. In some examples, additional user interfaces (not shown) may be provided for each onboarding workflow to configure authorization requirements for the particular onboarding workflow and/or customize portal appearance for the particular onboarding workflow.

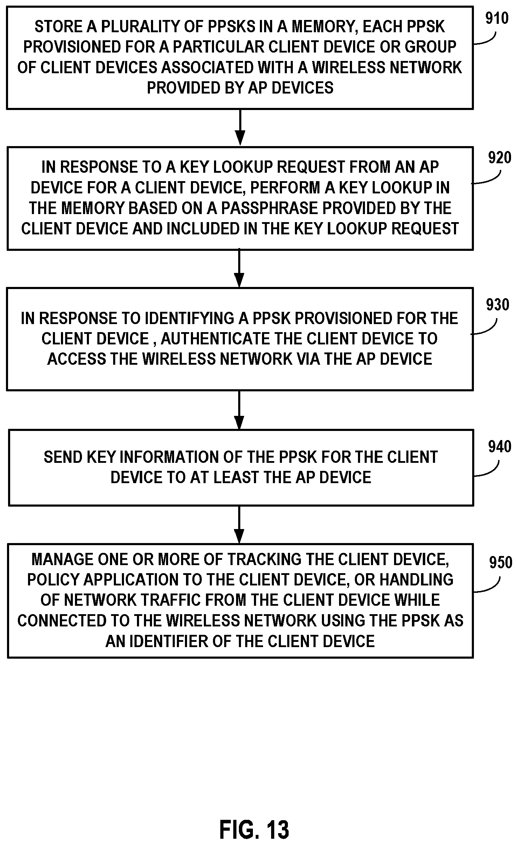

FIG. 13 is a flow chart illustrating an example operation by which the network management system onboards, tracks, and assigns policy to heterogeneous client devices connected to APs to access a wireless network, in accordance with one or more techniques of this disclosure. The example operation of FIG. 13 is described herein with respect to NMS 300 and PPSK manager 370 of FIG. 3. In other examples, the operation of FIG. 8 may be performed by other computing systems or devices configured to monitor and assess client-side behavior data, such as NMS 130 and PPSK manager 136 from FIGS. 1A-1B.

NMS 300 stores a plurality of PPSKs in PPSK store 340 of database 318, where each PPSK is provisioned for a particular client device or a particular group of client devices, e.g., client devices 148 from FIG. 1, associated with a wireless network, e.g., one of wireless networks 106 from FIG. 1, provided by a plurality of AP devices, e.g., AP devices 142 from FIG. 1, managed by NMS 300 (910).

To provision a PPSK for a client device or group of client devices, PPSK manager 370 may generate data representative of a PPSK user interface for display on a computing device of a network administrator, configure the PPSK with a key name, a wireless network name, and a passphrase based on the data received from the computing device via the PPSK user interface, and associate contact information of a user of the client device with the PPSK. PPSK manager 370 then outputs the passphrase of the PPSK using the contact information of the user, e.g., via email.

In some scenarios where the user of the client device is an employee or other long-term access holder, PPSK manager 370 may provision the PPSK for the client device and output the passphrase of the PPSK to the user after an employee onboarding process. In other scenarios, PPSK manager 370 may configure one or more onboarding workflows to enable PPSK self-provisioning portals for users that are guests, contractors, or other short-term access holders. For example, PPSK manager 370 may configure one or more of a contractor workflow, a guest workflow, or a sponsored guest workflow to enable client devices of users that fall within one of the workflow categories to self-provision PPSKs to access the associated wireless network. To configure the onboarding workflows, PPSK manager 370 may generate data representative of a workflow user interface for display on the computing device of the network administrator, and define PPSK parameters, authorization requirements, and/or portal appearance for a particular type of onboarding workflow based on the data received from the computing device via the workflow user interface.

In a self-provisioning scenario, PPSK manager 370 generates data representative of a user interface of a PPSK self-provisioning portal for display on an end-user computing device, e.g., on the client device itself or on a computing device of a lobby administrator at a particular enterprise or corporate site. The end-user computing device may access the PPSK self-provisioning portal via an onboarding workflow-specific URL. The user interface of the PPSK self-provisioning portal may vary between the different types of onboarding workflows, but at least includes one or more fillable fields to receive contact information of the user of the client device, e.g., an email address. Based on the contact information of the user received from the end-user computing device via the user interface, PPSK manager 370 provisions the PPSK for the client device in accordance with the particular type of onboarding workflow of the PPSK self-provisioning portal, and outputs the passphrase of the PPSK to at least one of the end user computing device or the client device.

When a user with a client device is within a building or wireless network coverage area of the particular enterprise or corporate site, the client device may attempt to access a wireless network via an AP device of a plurality of AP devices at the particular enterprise or corporate site. More specifically, in response to a key lookup request from the AP device for the client device requesting access to the wireless network via the AP device, PPSK manager 370 of NMS 300 performs a key lookup in PPSK store 340 based on at least the passphrase of the PPSK provided by the client device and included in the key lookup request (920). In some examples, NMS 300 includes a front-end with WLC 365 and PPSK cache 330 configured to hold a portion of the key information of the plurality of PPSKs stored in PPSK store 340. In response to the key lookup request, WLC 365 may perform a key lookup in the PPSK cache 330 based on at least the passphrase included in the key lookup request. When the PPSK for the client device is not found in the PPSK cache 330, WLC 365 sends the key lookup request to a back-end of NMS 300, e.g., PPSK manager 370, to perform the key lookup in PPSK store 340.

In response to identifying a PPSK provisioned for the client device in PPSK store 340, PPSK manager 370 authenticates the client device to access the wireless network via the AP device (930). To authenticate the client device, PPSK manager 370 determines whether the PPSK is valid for the client device based on at least one of whether a current date is past an expiration date for the PPSK or whether a number of concurrent active devices using the PPSK is below a usage limit for the PPSK.

In response to authenticating the client device to access the wireless network, PPSK manager 370 sends key information of the PPSK for the client device to at least the AP device (940). In examples where NMS 300 includes the front-end with WLC 365 and PPSK cache 300, WLC 365 may receive and record the key information of the PPSK for the client device in PPSK cache 330, detect one or more neighboring AP devices at the particular enterprise or corporate site to which the client device could roam from the AP device, and send the key information held in PPSK cache 330 to the one or more neighboring AP devices.

After the client device accesses the wireless network, PPSK manager 370 manages one or more of tracking the client device, policy application to the client device, or handling of network traffic from the client device while connected to the wireless network using the PPSK as an identifier of the client device (950).

As one example, in order to manage policy application to the client device while connected to the wireless network, PPSK manager 370 may assign one or more policies to the PPSK using one or more labels indicative of role assignments of the PPSK, and configure the one or more policies at each of the plurality of AP devices using the key information of the PPSK that includes at least a key name, a key value, and the one or more labels. In this example, the one or more policies are applied by the AP device to the client device identified by the PPSK.

As another example, in order to manage tracking the client device while connected to the wireless network, PPSK manager 370 may track user activity based on the key name of the PPSK for the client device included in the key information of the PPSK rather than a MAC address of the client device. In a different example, in order to manage tracking the client device while connected to the wireless network, PPSK manager 370 may provide the key name of the PPSK for the client device included in the key information of the PPSK for one or more client session logs. In still a different example, in order to manage tracking the client device while connected to the wireless network, PPSK manager 370 may track the client device using the key value of the PPSK for the client device included in the key information of the PPSK.

As an additional example, in order to manage handling of network traffic from the client device while connected to the wireless network, the PPSK manager 370 may assign a virtual network to the PPSK using a virtual network identifier, and designate a traffic forwarding method for the PPSK using the key information of the PPSK that includes at least a key name, a key value, and the virtual network identifier of the PPSK. In this example, the designated traffic forwarding method is used by the AP device based on the virtual network identifier to forward traffic received from the client device identified by PPSK.

Thus, from one perspective, there have now been described techniques that enable onboarding of a plurality of heterogeneous client devices with secure access to a wireless network using a network management system (NMS). The NMS has a memory to store a plurality of private pre-shared keys (PPSKs), where each PPSK is provisioned for a particular client device or a particular group of client devices. In response to a key lookup request from an access point (AP) device for a client device, the NMS performs a key lookup and, in response to identifying a PPSK provisioned for the client device, authenticates the client device to access the wireless network via the AP device. The NMS then manages one or more of tracking the client device, policy application to the client device, or handling of network traffic from the client device while connected to the wireless network using the PPSK as an identifier of the client device.

The techniques described herein may be implemented using software, hardware and/or a combination of software and hardware. Various examples are directed to apparatus, e.g., mobile nodes, mobile wireless terminals, base stations, e.g., access points, communications system. Various examples are also directed to methods, e.g., method of controlling and/or operating a communications device, e.g., wireless terminals (UEs), base stations, control nodes, access points and/or communications systems. Various examples are also directed to non-transitory machine, e.g., computer, readable medium, e.g., ROM, RAM, CDs, hard discs, etc., which include machine readable instructions for controlling a machine to implement one or more steps of a method.

It is understood that the specific order or hierarchy of steps in the processes disclosed is an example of example approaches. Based upon design preferences, it is understood that the specific order or hierarchy of steps in the processes may be rearranged while remaining within the scope of the present disclosure. The accompanying method claims present elements of the various steps in a sample order and are not meant to be limited to the specific order or hierarchy presented.

In various examples devices and nodes described herein are implemented using one or more modules to perform the steps corresponding to one or more methods, for example, signal generation, transmitting, processing, and/or receiving steps. Thus, in some examples various features are implemented using modules. Such modules may be implemented using software, hardware or a combination of software and hardware. In some examples each module is implemented as an individual circuit with the device or system including a separate circuit for implementing the function corresponding to each described module. Many of the above described methods or method steps can be implemented using machine executable instructions, such as software, included in a machine readable medium such as a memory device, e.g., RAM, floppy disk, etc. to control a machine, e.g., general purpose computer with or without additional hardware, to implement all or portions of the above described methods, e.g., in one or more nodes. Accordingly, among other things, various examples are directed to a machine-readable medium e.g., a computer readable medium, including machine executable instructions for causing a machine, e.g., processor and associated hardware, to perform one or more of the steps of the above-described method(s). Some examples are directed to a device including a processor configured to implement one, multiple, or all of the steps of one or more methods of the one example aspect.

In some examples, the processor or processors, e.g., CPUs, of one or more devices, e.g., communications devices such as wireless terminals (UEs), and/or access nodes, are configured to perform the steps of the methods described as being performed by the devices. The configuration of the processor may be achieved by using one or more modules, e.g., software modules, to control processor configuration and/or by including hardware in the processor, e.g., hardware modules, to perform the recited steps and/or control processor configuration. Accordingly, some but not all examples are directed to a communications device, e.g., user equipment, with a processor which includes a module corresponding to each of the steps of the various described methods performed by the device in which the processor is included. In some but not all examples a communications device includes a module corresponding to each of the steps of the various described methods performed by the device in which the processor is included. The modules may be implemented purely in hardware, e.g., as circuits, or may be implemented using software and/or hardware or a combination of software and hardware.

Some examples are directed to a computer program product comprising a computer-readable medium comprising code for causing a computer, or multiple computers, to implement various functions, steps, acts and/or operations, e.g., one or more steps described above. In some examples, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some examples are directed to a processor configured to implement one or more of the various functions, steps, acts and/or operations of one or more methods described above. Accordingly, some examples are directed to a processor, e.g., CPU, graphical processing unit (GPU), digital signal processing (DSP) unit, etc., configured to implement some or all of the steps of the methods described herein. The processor may be for use in, e.g., a communications device or other device described in the present application. Additionally, or alternatively, the computer readable medium can include transient media such as carrier signals and transmission media.

Numerous additional variations on the methods and apparatus of the various examples described above will be apparent to those skilled in the art in view of the above description. Such variations are to be considered within the scope of this disclosure. The methods and apparatus may be, and in various examples are, used with BLE, LTE, CDMA, orthogonal frequency division multiplexing (OFDM), and/or various other types of communications techniques which may be used to provide wireless communications links between access nodes and mobile nodes. In some examples the access nodes are implemented as base stations which establish communications links with user equipment devices, e.g., mobile nodes, using OFDM and/or CDMA. In various examples the mobile nodes are implemented as notebook computers, personal data assistants (PDAs), or other portable devices including receiver/transmitter circuits and logic and/or routines, for implementing the methods.

In the detailed description, numerous specific details are set forth in order to provide a thorough understanding of some examples. However, it will be understood by persons of ordinary skill in the art that some examples may be practiced without these specific details. In other instances, well-known methods, procedures, components, units and/or circuits have not been described in detail so as not to obscure the discussion.

Some examples may be used in conjunction with various devices and systems, for example, a User Equipment (UE), a Mobile Device (MD), a wireless station (STA), a wireless terminal (WT), a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some examples may be used in conjunction with devices and/or networks operating in accordance with existing Wireless-Gigabit-Alliance (WGA) specifications (Wireless Gigabit Alliance, Inc. WiGig MAC and PHY Specification Version 1.1, April 2011, Final specification) and/or future versions and/or derivatives thereof, devices and/or networks operating in accordance with existing IEEE 802.11 standards (IEEE 802.11-2012, IEEE Standard for Information technology--Telecommunications and information exchange between systems Local and metropolitan area networks--Specific requirements Part 11: Wireless LAN Medium Access Control (MAC) and Physical Layer (PHY) Specifications, March 29, 2012; IEEE802.11ac-2013 ("IEEE P802.11ac-2013, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 4: Enhancements for Very High Throughput for Operation in Bands below 6GHz", December, 2013); IEEE 802.11ad ("IEEE P802.11ad-2012, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 3: Enhancements for Very High Throughput in the 60 GHz Band", 28 December, 2012); IEEE-802.1IREVmc ("IEEE 802.11-REVmcTM/D3.0, June 2014 draft standard for Information technology - Telecommunications and information exchange between systems Local and metropolitan area networks Specific requirements; Part 11: Wireless LAN Medium Access Control (MAC) and Physical Layer (PHY) Specification"); IEEE802.11-ay (P802.11ay Standard for Information Technology--Telecommunications and Information Exchange Between Systems Local and Metropolitan Area Networks--Specific Requirements Part 11: Wireless LAN Medium Access Control (MAC) and Physical Layer (PHY) Specifications--Amendment: Enhanced Throughput for Operation in License-Exempt Bands Above 45 GHz)), IEEE 802.11-2016 and/or future versions and/or derivatives thereof, devices and/or networks operating in accordance with existing Wireless Fidelity (Wi-Fi) Alliance (WFA) Peer-to-Peer (P2P) specifications (Wi-Fi P2P technical specification, version 1.5, August 2014) and/or future versions and/or derivatives thereof, devices and/or networks operating in accordance with existing cellular specifications and/or protocols, e.g., 3rd Generation Partnership Project (3GPP), 3GPP Long Term Evolution (LTE) and/or future versions and/or derivatives thereof, units and/or devices which are part of the above networks, or operate using any one or more of the above protocols, and the like.

Some examples may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some examples may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), MultiUser MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth , Global Positioning System (GPS), Wi-Fi, Wi-Max, ZigBee^{™}, Ultra-Wideband (UWB), Global System for Mobile communication (GSM), 2G, 2.5G, 3G, 3.5G, 4G, Fifth Generation (5G), or Sixth Generation (6G) mobile networks, 3GPP, Long Term Evolution (LTE), LTE advanced, Enhanced Data rates for GSM Evolution (EDGE), or the like. Other examples may be used in various other devices, systems and/or networks.

Some demonstrative examples may be used in conjunction with a WLAN (Wireless Local Area Network), e.g., a Wi-Fi network. Other examples may be used in conjunction with any other suitable wireless communication network, for example, a wireless area network, a "piconet", a WPAN, a WVAN, and the like.

Some examples may be used in conjunction with a wireless communication network communicating over a frequency band of 2.4Ghz, 5 GHz and/or 60 GHz. However, other examples may be implemented utilizing any other suitable wireless communication frequency band(s), for example, an Extremely High Frequency (EHF) band (the millimeter wave (mmWave) frequency band), e.g., a frequency band within the frequency band of between 20GhH and 300GHz, a WLAN frequency band, a WPAN frequency band, a frequency band according to the WGA specification, and the like.

While the above provides just some simple examples of the various device configurations, it is to be appreciated that numerous variations and permutations are possible. Moreover, the technology is not limited to any specific channels, but is generally applicable to any frequency range(s)/channel(s). Moreover, and as discussed, the technology may be useful in the unlicensed spectrum

Although examples are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, a communication system or subsystem, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Although examples are not limited in this regard, the terms "plurality" and "a plurality" as used herein may include, for example, "multiple" or "two or more." The terms "plurality" or "a plurality" may be used throughout the specification to describe two or more components, devices, elements, units, parameters, circuits, or the like. For example, "a plurality of stations" may include two or more stations.

It may be advantageous to set forth definitions of certain words and phrases used throughout this document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, interconnected with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, circuitry, firmware or software, or some combination of at least two of the same. It should be noted that the functionality associated with any particular controller may be centralized or distributed, whether locally or remotely. Definitions for certain words and phrases are provided throughout this document and those of ordinary skill in the art should understand that in many, if not most instances, such definitions apply to prior, as well as future uses of such defined words and phrases.

The examples have been described in relation to communications systems, as well as protocols, techniques, means and methods for performing communications, such as in a wireless network, or in general in any communications network operating using any communications protocol(s). Examples of such are home or access networks, wireless home networks, wireless corporate networks, and the like. It should be appreciated however that in general, the systems, methods and techniques disclosed herein will work equally well for other types of communications environments, networks and/or protocols.

For purposes of explanation, numerous details are set forth in order to provide a thorough understanding of the present techniques. It should be appreciated however that the present disclosure may be practiced in a variety of ways beyond the specific details set forth herein. Furthermore, while the examples illustrated herein show various components of the system collocated, it is to be appreciated that the various components of the system can be located at distant portions of a distributed network, such as a communications network, node, within a Domain Master, and/or the Internet, or within a dedicated secured, unsecured, and/or encrypted system and/or within a network operation or management device that is located inside or outside the network. As an example, a Domain Master can also be used to refer to any device, system or module that manages and/or configures or communicates with any one or more aspects of the network or communications environment and/or transceiver(s) and/or stations and/or access point(s) described herein.

Thus, it should be appreciated that the components of the system can be combined into one or more devices, or split between devices, such as a transceiver, an access point, a station, a Domain Master, a network operation or management device, a node or collocated on a particular node of a distributed network, such as a communications network. As will be appreciated from the following description, and for reasons of computational efficiency, the components of the system can be arranged at any location within a distributed network without affecting the operation thereof. For example, the various components can be located in a Domain Master, a node, a domain management device, such as a MIB, a network operation or management device, a transceiver(s), a station, an access point(s), or some combination thereof. Similarly, one or more of the functional portions of the system could be distributed between a transceiver and an associated computing device/system.

Furthermore, it should be appreciated that the various links, including any communications channel(s)/elements/lines connecting the elements, can be wired or wireless links or any combination thereof, or any other known or later developed element(s) capable of supplying and/or communicating data to and from the connected elements. The term module as used herein can refer to any known or later developed hardware, circuitry, software, firmware, or combination thereof, that is capable of performing the functionality associated with that element. The terms determine, calculate, and compute and variations thereof, as used herein are used interchangeable and include any type of methodology, process, technique, mathematical operational or protocol.

Moreover, while some of the examples described herein are directed toward a transmitter portion of a transceiver performing certain functions, or a receiver portion of a transceiver performing certain functions, this disclosure is intended to include corresponding and complementary transmitter-side or receiver-side functionality, respectively, in both the same transceiver and/or another transceiver(s), and vice versa.

The examples are described in relation to enhanced communications. However, it should be appreciated, that in general, the systems and methods herein will work equally well for any type of communication system in any environment utilizing any one or more protocols including wired communications, wireless communications, powerline communications, coaxial cable communications, fiber optic communications, and the like.

The example systems and methods are described in relation to IEEE 802.11 and/or Bluetooth^{®} and/or Bluetooth^{®} Low Energy transceivers and associated communication hardware, software, and communication channels. However, to avoid unnecessarily obscuring the present disclosure, the following description omits well-known structures and devices that may be shown in block diagram form or otherwise summarized.

While the above-described flowcharts have been discussed in relation to a particular sequence of events, it should be appreciated that changes to this sequence can occur without materially effecting the operation of the example(s). Additionally, the example techniques illustrated herein are not limited to the specifically illustrated examples but can also be utilized with the other examples and each described feature is individually and separately claimable.

The above-described system can be implemented on a wireless telecommunications device(s)/system, such an IEEE 802.11 transceiver, or the like. Examples of wireless protocols that can be used with this technology include IEEE 802.11a, IEEE 802.11b, IEEE 802.11g, IEEE 802.11n, IEEE 802.11ac, IEEE 802.11ad, IEEE 802.11af, IEEE 802.1 1ah, IEEE 802.11ai, IEEE 802.11aj, IEEE 802.11aq, IEEE 802.11ax, Wi-Fi, LTE, 4G, Bluetooth^{®}, WirelessHD, WiGig, WiGi, 3GPP, Wireless LAN, WiMAX, DensiFi SIG, Unifi SIG, 3GPP LAA (licensed-assisted access), and the like.

Additionally, the systems, methods and protocols can be implemented to improve one or more of a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device such as PLD, PLA, FPGA, PAL, a modem, a transmitter/receiver, any comparable means, or the like. In general, any device capable of implementing a state machine that is in turn capable of implementing the methodology illustrated herein can benefit from the various communication methods, protocols, and techniques according to the disclosure provided herein.

Examples of the processors as described herein may include, but are not limited to, at least one of Qualcomm^{®} Snapdragon^{®} 800 and 801, Qualcomm^{®} Snapdragon^{®} 610 and 615 with 4G LTE Integration and 64-bit computing, Apple^{®} A7 processor with 64-bit architecture, Apple^{®} M7 motion coprocessors, Samsung^{®} Exynos^{®} series, the Intel^{®} Core^{™} family of processors, the Intel^{®} Xeon^{®} family of processors, the Intel^{®} Atom^{™} family of processors, the Intel Itanium^{®} family of processors, Intel^{®} Core^{®} i5-4670K and i7-4770K 22nm Haswell, Intel^{®} Core^{®} i5-3570K 22nm Ivy Bridge, the AMD^{®} FX^{™} family of processors, AMD^{®} FX-4300, FX-6300, and FX-8350 32nm Vishera, AMD^{®} Kaveri processors, Texas Instruments^{®} Jacinto C6000^{™} automotive infotainment processors, Texas Instruments^{®} OMAP^{™} automotive-grade mobile processors, ARM^{®} Cortex^{™}-M processors, ARM^{®} Cortex-A and ARM926FJ-S^{™} processors, Broadcom^{®} AirForce BCM4704/BCM4703 wireless networking processors, the AR7100 Wireless Network Processing Unit, other industry-equivalent processors, and may perform computational functions using any known or future-developed standard, instruction set, libraries, and/or architecture.

Furthermore, the disclosed methods may be readily implemented in software using object or object-oriented software development environments that provide portable source code that can be used on a variety of computer or workstation platforms. Alternatively, the disclosed system may be implemented partially or fully in hardware using standard logic circuits or VLSI design. Whether software or hardware is used to implement the systems in accordance with the examples is dependent on the speed and/or efficiency requirements of the system, the particular function, and the particular software or hardware systems or microprocessor or microcomputer systems being utilized. The communication systems, methods and protocols illustrated herein can be readily implemented in hardware and/or software using any known or later developed systems or structures, devices and/or software by those of ordinary skill in the applicable art from the functional description provided herein and with a general basic knowledge of the computer and telecommunications arts.

Moreover, the disclosed techniques may be readily implemented in software and/or firmware that can be stored on a storage medium to improve the performance of a programmed general-purpose computer with the cooperation of a controller and memory, a special purpose computer, a microprocessor, or the like. In these instances, the systems and methods can be implemented as program embedded on personal computer such as an applet, JAVA.RTM. or CGI script, as a resource residing on a server or computer workstation, as a routine embedded in a dedicated communication system or system component, or the like. The system can also be implemented by physically incorporating the system and/or method into a software and/or hardware system, such as the hardware and software systems of a communications transceiver.

It is therefore apparent that there have at least been provided systems and methods for enhancing and improving conversational user interface. Many alternatives, modifications and variations would be or are apparent to those of ordinary skill in the applicable arts. Accordingly, this disclosure is intended to embrace all such alternatives, modifications, equivalents, and variations that are within the scope of this disclosure.

Further examples of feature combinations taught by the present disclosure are set out in the following numbered clauses:
1. A network management system that manages a plurality of access point (AP) devices configured to provide a wireless network, the network management system comprising:
   a memory storing a plurality of private pre-shared keys (PPSKs), wherein each PPSK is provisioned for a particular client device or a particular group of client devices associated with the wireless network; and
   one or more processors coupled to the memory and configured to:
      perform, in response to a key lookup request from an AP device of the plurality of AP devices for a client device requesting access to the wireless network via the AP device, a key lookup in the memory based on at least a passphrase provided by the client device and included in the key lookup request;
      in response to identifying a PPSK provisioned for the client device in the memory, authenticate the client device to access the wireless network via the AP device;
      send key information of the PPSK for the client device to at least the AP device; and
      manage one or more of tracking the client device, policy application to the client device, or handling of network traffic from the client device while connected to the wireless network using the PPSK as an identifier of the client device.
2. The network management system of clause 1, further comprising a front-end with a wireless local area network (LAN) controller (WLC) and a PPSK cache configured to hold a portion of the key information of the plurality of PPSKs stored in the memory, wherein the WLC is configured to:
   in response to the key lookup request, perform a key lookup in the PPSK cache based on at least the passphrase included in the key lookup request; and
   when the PPSK for the client device is not found in the PPSK cache, send the key lookup request to a back-end of the network management system to perform the key lookup in the memory.
3. The network management system of clause 1 or clause 2, further comprising a front-end with a wireless local area network (LAN) controller (WLC) and a PPSK cache configured to hold a portion of the key information of the plurality of PPSKs stored in the memory, wherein the WLC is configured to:
   record the key information of the PPSK for the client device in the PPSK cache;
   detect one or more neighboring AP devices to which the client device could roam from the AP device; and
   send the key information held in the PPSK cache to the one or more neighboring AP devices.
4. The network management system of any preceding clause, wherein to authenticate the client device, the one or more processors are configured to determine whether the PPSK is valid for the client device based on at least one of whether a current date is past an expiration date for the PPSK or whether a number of concurrent active devices using the PPSK is below a usage limit for the PPSK.
5. The network management system of any preceding clause, wherein the key information of the PPSK includes at least a key name, a key value, and one or more labels indicative of role assignments of the PPSK, and wherein to manage policy application to the client device while connected to the wireless network, the one or more processors are configured to:
   assign one or more policies to the PPSK using the one or more labels; and
   configure the one or more policies at each of the plurality of AP devices, wherein the one or more policies are applied by the AP device to the client device identified by the PPSK.
6. The network management system of any preceding clause, wherein the key information of the PPSK includes at least a key name and a key value, and wherein to manage tracking the client device while connected to the wireless network, the one or more processors are configured to one or more of:
   track user activity based on the key name of the PPSK for the client device rather than a medium access control (MAC) address of the client device;
   provide the key name of the PPSK for the client device for one or more client session logs; or
   track the client device using the key value of the PPSK for the client device.
7. The network management system of any preceding clause, wherein the key information of the PPSK includes at least a key name, a key value, and a virtual network identifier of the PPSK, and wherein to manage handling of network traffic from the client device while connected to the wireless network, the one or more processors configured to:
   assign a virtual network to the PPSK using the virtual network identifier; and
   designate a traffic forwarding method for the PPSK, wherein the designated traffic forwarding method is used by the AP device based on the virtual network identifier to forward traffic received from the client device identified by PPSK.
8. The network management system of any preceding clause, wherein the memory stores the plurality of PPSKs in a data store that does not include medium access control (MAC) addresses of the client devices for which the PPSKs are provisioned.
9. The network management system of any preceding clause, wherein the memory stores the plurality of PPSKs in a data store hosted in a micro-services cloud infrastructure with no scaling limits.
10. The network management system of any preceding clause, wherein to provision the PPSK for the client device, the one or more processors are configured to:
   generate data representative of a user interface for display on a computing device of a network administrator;
   configure, based on data received from the computing device via the user interface, the PPSK with a key name, a wireless network name, and the passphrase; and
   associate, based on data received from the computing device via the user interface, contact information of a user of the client device with the PPSK.
11. The network management system of clause 10, wherein the one or more processors are further configured to configure, based on data received from the computing device via the user interface, the PPSK with at least one of:
   a virtual network identifier and a traffic forwarding method comprising one of local forwarding or remote tunneling;
   one or more role assignments;
   a usage limit comprising one of unlimited devices or a set number of devices; or
   an expiration date and reminder information that indicates whether to notify a user of the client device before expiration of the PPSK.
12. The network management system of any preceding clause, wherein the one or more processors are further configured to:
   generate data representative of a user interface of a PPSK self-provisioning portal for display on an end-user computing device, the PPSK self-provisioning portal associated with a particular type of onboarding workflow, wherein the data representative of the user interface includes at least one fillable field to receive contact information of a user of the client device;
   provision, based on the contact information of the user received from the end-user computing device via the user interface, the PPSK for the client device in accordance with the particular type of onboarding workflow of the PPSK self-provisioning portal; and
   output the passphrase of the PPSK to at least one of the end user computing device or the client device.
13. The network management system of clause 12, wherein to provision the PPSK for the client device, the one or more processors are configured to:
   in the case of a contractor onboarding workflow, provision the PPSK for the client device in response to identifying the contact information of the user in a user directory;
   in the case of a guest onboarding workflow, provision the PPSK for the client device in response to receiving a guest access request from a lobby administrator for the contact information of the user; or
   in the case of a sponsored onboarding workflow, provision the PPSK for the client device in response to receiving approval from a sponsor for the contact information of the user.
14. A method comprising:
   storing, by a network management system, a plurality of private pre-shared keys (PPSKs) in a memory, wherein each PPSK is provisioned for a particular client device or a particular group of client devices associated with a wireless network provided by a plurality of access point (AP) devices managed by the network management system;
   performing, by the network management system, in response to a key lookup request from an AP device of the plurality of AP devices for a client device requesting access to the wireless network via the AP device, a key lookup in the memory based on at least a passphrase provided by the client device and included in the key lookup request;
   in response to identifying a PPSK provisioned for the client device in the memory, authenticating, by the network management system, the client device to access the wireless network via the AP device;
   sending, by the network management system, key information of the PPSK for the client device to at least the AP device; and
   managing, by the network management system, one or more of tracking the client device, policy application to the client device, or handling of network traffic from the client device while connected to the wireless network using the PPSK as an identifier of the client device.
15. The method of clause 14, wherein the network management system includes a front-end with a wireless local area network (LAN) controller (WLC) and a PPSK cache, the method further comprising:
   holding, by the PPSK cache, a portion of the key information of the plurality of PPSKs stored in the memory;
   in response to the key lookup request, performing, by the WLC, a key lookup in the PPSK cache based on at least the passphrase included in the key lookup request; and
   when the PPSK for the client device is not found in the PPSK cache, sending, by the WLC, the key lookup request to a back-end of the network management system to perform the key lookup in the memory.
16. The method of clause 14 or clause 15, wherein the key information of the PPSK includes at least a key name, a key value, and one or more labels indicative of role assignments of the PPSK, and wherein managing policy application to the client device while connected to the wireless network comprises:
   assigning one or more policies to the PPSK using the one or more labels; and
   configuring the one or more policies at each of the plurality of AP devices, wherein the one or more policies are applied by the AP device to the client device identified by the PPSK.
17. The method of any of clauses 14 to 16, wherein the key information of the PPSK includes at least a key name and a key value, and wherein managing tracking the client device while connected to the wireless network comprises one or more of:
   tracking user activity based on the key name of the PPSK for the client device rather than a medium access control (MAC) address of the client device;
   providing the key name of the PPSK for the client device for one or more client session logs; or
   tracking the client device using the key value of the PPSK for the client device.
18. The method of any of clauses 14 to 17, wherein the key information of the PPSK includes at least a key name, a key value, and a virtual network identifier of the PPSK, and wherein managing handling of network traffic from the client device while connected to the wireless network comprises:
   assigning a virtual network to the PPSK using the virtual network identifier; and
   designating a traffic forwarding method for the PPSK, wherein the designated traffic forwarding method is used by the AP device based on the virtual network identifier to forward traffic received from the client device identified by PPSK.
19. The method of any of clauses 14 to 18, further comprising provisioning the PPSK for the client device, wherein providing the PPSK for the client device comprises:
   generating data representative of a user interface for display on a computing device of a network administrator;
   configuring, based on data received from the computing device via the user interface, the PPSK with a key name, a wireless network name, and the passphrase; and
   associating, based on data received from the computing device via the user interface, contact information of a user of the client device with the PPSK.
20. A computer-readable storage medium comprising instructions that, when executed, cause one or more processors of a network management system to:
   store a plurality of private pre-shared keys (PPSKs) in a memory, wherein each PPSK is provisioned for a particular client device or a particular group of client devices associated with a wireless network provided by a plurality of access point (AP) devices managed by the network management system;
   perform, in response to a key lookup request from an AP device of the plurality of AP devices for a client device requesting access to the wireless network via the AP device, a key lookup in the memory based on at least a passphrase provided by the client device and included in the key lookup request;
   in response to identifying a PPSK provisioned for the client device in the memory, authenticate the client device to access the wireless network via the AP device;
   send key information of the PPSK for the client device to at least the AP device; and
   manage one or more of tracking the client device, policy application to the client device, or handling of network traffic from the client device while connected to the wireless network using the PPSK as an identifier of the client device.

## Claims

1. A network management system that manages a plurality of access point (AP) devices configured to provide a wireless network, the network management system comprising:
a memory storing a plurality of private pre-shared keys (PPSKs), wherein each PPSK is provisioned for a particular client device or a particular group of client devices associated with the wireless network; and
one or more processors coupled to the memory and configured to:
perform, in response to a key lookup request from an AP device of the plurality of AP devices for a client device requesting access to the wireless network via the AP device, a key lookup in the memory based on at least a passphrase provided by the client device and included in the key lookup request;
in response to identifying a PPSK provisioned for the client device in the memory, authenticate the client device to access the wireless network via the AP device;
send key information of the PPSK for the client device to at least the AP device; and
manage one or more of tracking the client device, policy application to the client device, or handling of network traffic from the client device while connected to the wireless network using the PPSK as an identifier of the client device.

2. The network management system of claim 1, further comprising a front-end with a wireless local area network (LAN) controller (WLC) and a PPSK cache configured to hold a portion of the key information of the plurality of PPSKs stored in the memory, wherein the WLC is configured to:
in response to the key lookup request, perform a key lookup in the PPSK cache based on at least the passphrase included in the key lookup request; and
when the PPSK for the client device is not found in the PPSK cache, send the key lookup request to a back-end of the network management system to perform the key lookup in the memory.

3. The network management system of any of claims 1-2, further comprising a front-end with a wireless local area network (LAN) controller (WLC) and a PPSK cache configured to hold a portion of the key information of the plurality of PPSKs stored in the memory, wherein the WLC is configured to:
record the key information of the PPSK for the client device in the PPSK cache;
detect one or more neighboring AP devices to which the client device could roam from the AP device; and
send the key information held in the PPSK cache to the one or more neighboring AP devices.

4. The network management system of any of claims 1-3, wherein to authenticate the client device, the one or more processors are configured to determine whether the PPSK is valid for the client device based on at least one of whether a current date is past an expiration date for the PPSK or whether a number of concurrent active devices using the PPSK is below a usage limit for the PPSK.

5. The network management system of any of claims 1-4, wherein the key information of the PPSK includes at least a key name, a key value, and one or more labels indicative of role assignments of the PPSK, and wherein to manage policy application to the client device while connected to the wireless network, the one or more processors are configured to:
assign one or more policies to the PPSK using the one or more labels; and
configure the one or more policies at each of the plurality of AP devices, wherein the one or more policies are applied by the AP device to the client device identified by the PPSK.

6. The network management system of any of claims 1-5, wherein the key information of the PPSK includes at least a key name and a key value, and wherein to manage tracking the client device while connected to the wireless network, the one or more processors are configured to one or more of:
track user activity based on the key name of the PPSK for the client device rather than a medium access control (MAC) address of the client device;
provide the key name of the PPSK for the client device for one or more client session logs; or
track the client device using the key value of the PPSK for the client device.

7. The network management system of any of claims 1-6, wherein the key information of the PPSK includes at least a key name, a key value, and a virtual network identifier of the PPSK, and wherein to manage handling of network traffic from the client device while connected to the wireless network, the one or more processors configured to:
assign a virtual network to the PPSK using the virtual network identifier; and
designate a traffic forwarding method for the PPSK, wherein the designated traffic forwarding method is used by the AP device based on the virtual network identifier to forward traffic received from the client device identified by PPSK.

8. The network management system of any of claims 1-7, wherein the memory stores the plurality of PPSKs in a data store that does not include medium access control (MAC) addresses of the client devices for which the PPSKs are provisioned.

9. The network management system of any of claims 1-8, wherein the memory stores the plurality of PPSKs in a data store hosted in a micro-services cloud infrastructure with no scaling limits.

10. The network management system of any of claims 1-9, wherein to provision the PPSK for the client device, the one or more processors are configured to:
generate data representative of a user interface for display on a computing device of a network administrator;
configure, based on data received from the computing device via the user interface, the PPSK with a key name, a wireless network name, and the passphrase; and
associate, based on data received from the computing device via the user interface, contact information of a user of the client device with the PPSK.

11. The network management system of claim 10, wherein the one or more processors are further configured to configure, based on data received from the computing device via the user interface, the PPSK with at least one of:
a virtual network identifier and a traffic forwarding method comprising one of local forwarding or remote tunneling;
one or more role assignments;
a usage limit comprising one of unlimited devices or a set number of devices; or
an expiration date and reminder information that indicates whether to notify a user of the client device before expiration of the PPSK.

12. The network management system of any of claims 1-11, wherein the one or more processors are further configured to:
generate data representative of a user interface of a PPSK self-provisioning portal for display on an end-user computing device, the PPSK self-provisioning portal associated with a particular type of onboarding workflow, wherein the data representative of the user interface includes at least one fillable field to receive contact information of a user of the client device;
provision, based on the contact information of the user received from the end-user computing device via the user interface, the PPSK for the client device in accordance with the particular type of onboarding workflow of the PPSK self-provisioning portal; and
output the passphrase of the PPSK to at least one of the end user computing device or the client device.

13. The network management system of claim 12, wherein to provision the PPSK for the client device, the one or more processors are configured to:
in the case of a contractor onboarding workflow, provision the PPSK for the client device in response to identifying the contact information of the user in a user directory;
in the case of a guest onboarding workflow, provision the PPSK for the client device in response to receiving a guest access request from a lobby administrator for the contact information of the user; or
in the case of a sponsored onboarding workflow, provision the PPSK for the client device in response to receiving approval from a sponsor for the contact information of the user.

14. A method comprising:
storing, by a network management system, a plurality of private pre-shared keys (PPSKs) in a memory, wherein each PPSK is provisioned for a particular client device or a particular group of client devices associated with a wireless network provided by a plurality of access point (AP) devices managed by the network management system;
performing, by the network management system, in response to a key lookup request from an AP device of the plurality of AP devices for a client device requesting access to the wireless network via the AP device, a key lookup in the memory based on at least a passphrase provided by the client device and included in the key lookup request;
in response to identifying a PPSK provisioned for the client device in the memory, authenticating, by the network management system, the client device to access the wireless network via the AP device;
sending, by the network management system, key information of the PPSK for the client device to at least the AP device; and
managing, by the network management system, one or more of tracking the client device, policy application to the client device, or handling of network traffic from the client device while connected to the wireless network using the PPSK as an identifier of the client device.

15. A computer-readable medium comprising instructions that, when executed, cause one or more processors of a network management system to:
store a plurality of private pre-shared keys (PPSKs) in a memory, wherein each PPSK is provisioned for a particular client device or a particular group of client devices associated with a wireless network provided by a plurality of access point (AP) devices managed by the network management system;
perform, in response to a key lookup request from an AP device of the plurality of AP devices for a client device requesting access to the wireless network via the AP device, a key lookup in the memory based on at least a passphrase provided by the client device and included in the key lookup request;
in response to identifying a PPSK provisioned for the client device in the memory, authenticate the client device to access the wireless network via the AP device;
send key information of the PPSK for the client device to at least the AP device; and
manage one or more of tracking the client device, policy application to the client device, or handling of network traffic from the client device while connected to the wireless network using the PPSK as an identifier of the client device.
